# EUROPÄISCHE PATENTSCHRIFT

(11) **EP 1 171 269 B1**
(45) Veröffentlichungstag und Bekanntmachung des Hinweises auf die Patenterteilung: **17.03.2004**
(21) Anmeldenummer: 00926891.3
(22) Anmeldetag: 12.04.2000
(51) Int. Cl.: B27N 3/14

(54) **FORMSTATION**
FORMING STATION
POSTE DE FORMAGE

(30) Priorität: 12.04.1999 DE 19916447
(43) Veröffentlichungstag der Anmeldung: 16.01.2002
(73) Patentinhaber: Dieffenbacher GmbH & Co. KG, 75031 Eppingen (DE)
(72) Erfinder: WIRTHEL, Rainer, D-64247 Griesheim (DE); HENSCHEL, Walter, D-64853 Otzberg (DE); BROMMER, Ekkehard, D-69126 Heidelberg (DE); DENUEL, Günther, D-86343 Königsbrunn (DE); SEIDEL, Mario, D-86424 Dinkelscherben (DE)
(74) Vertreter: Behrens, Helmut, Dipl.-Ing.
(86) Internationale Anmeldenummer: PCT/EP2000/003286
(87) Internationale Veröffentlichungsnummer: WO 2000/061343

(56) Entgegenhaltungen:
- DE-A- 19 544 866
- US-A- 4 359 151
- US-A- 4 469 216
- US-A- 5 676 236
- PATENT ABSTRACTS OF JAPAN vol. 1998, no. 06, 30. April 1998 (1998-04-30) & JP 10 034615 A (DAIKEN TRADE &IND CO LTD), 10. Februar 1998 (1998-02-10)

## Beschreibung

Die Erfindung betrifft eine Formstation für Span- oder Faserplatten nach dem Oberbegriff des Patentanspruchs 1.

Bei der Herstellung von Span- oder Faserplatten werden mittels einer Formstation rieselfähige Güter wie mit Bindemitteln versehene Späne oder Fasern aus einem Dosierbunker ausgetragen und einem Streukopf als Streuvorrichtung zugeführt. Durch den Streukopf werden die Späne oder Fasern zu einem Vlies auf ein kontinuierlich laufendes Formband aufgestreut und dann in einer nachfolgenden Preßstation zu einer fertigen Platte geformt.

Eine derartige Formstation ist aus dem Firmenprospekt "Formstation", SP 0208, Ausgabe März 1985 der Firma Carl Schenck AG in Darmstadt vorbekannt. Dort wird über Austragswalzen das beleimte Span- oder Fasermaterial über die gesamte Breite aus dem Dosierbunker ausgetragen und zu einem Streukopf gefördert, um dann auf ein Formband gestreut zu werden. In den bekannten Streuköpfen sind in der Regel Streuwalzen von bestimmter Breite angeordnet, die das Späne- oder Faservlies auf einer bestimmten Breite auf das Formband verteilen. In der Praxis ist es aber häufig erforderlich, Platten in unterschiedlichen Breiten auf der selben Streustation zu streuen. Deshalb wird häufig die größtmögliche Breite des Vlieses auf das Formband gestreut und dann der überbreite Teil vom Formband gleichmäßig auf jeder Seite entfernt. Das überschüssige Vliesmaterial wird dann über Fördervorrichtungen wieder in den Dosierbunker zurückgeführt. Da das zurückgeführte Plattenmaterial bereits mit Bindemitteln versehen ist, treten während der Rückführung physikalische und/oder chemische Veränderungen auf, die die Endqualität der Platten ungünstig beeinflussen.

Aus der DE GM 71 37 773 ist eine Formstation mit einem Streukopf vorbekannt, bei dem die Breite des auszustreuenden Vlieses im Streukopf einstellbar ist. Dazu sind im Streukopf unterhalb eines Rückstreifrechens verschiebbare Leitstücke und verstellbare Seitenwände vorgesehen, durch die die Streubreite in einem bestimmten Bereich verringert werden kann. Die Leitstücke sind dabei vertikal zwischen einem Abstreifrechen und einem Dosierband angeordnet und können seitlich aufeinander zu oder voneinander weg bewegt werden. Dadurch kann auf dem Dosierband ein Vorvlies gebildet werden, dessen Breite durch die Verschiebung der Leitstücke einstellbar ist. Dabei ist die Höhe des Vorvlieses durch die Höhe der Leitstücke vorgegeben. Dieses Vorvlies wird dann durch eine Streuwalze aufgelöst und auf ein darunter angeordnetes Formband zu einem Spänevlies gestreut, wobei die Streubreite durch verstellbare Seitenwände an die Breite des Vorvlieses angepaßt wird. Da bei einer Bandbreitenverstellung die Bunkerwände nicht mit verstellbar sind, muß erst der Dosierbunker entleert werden, ehe mit geringerer Streubreite weiter gestreut werden kann. Dadurch kommt es zwangsläufig zum Stillstand der Formstation, was eine Produktionsunterbrechung bedeutet.

Aus der US 4,469,216 ist eine Streustation zur Herstellung von OSB-Platten (Oriented Structural Board) offenbart, bei der flache großflächige beleimte Holzspäne (Strands bzw. Flakes) aus einem Dosierbunker auf ein Förderband ausgetragen werden. An der Abwurfkante ist unter dem Förderband eine Trichterkonstruktion angeordnet, in der die Strands eingeworfen werden.

Diese Trichtervorrichtung besteht aus drei in Förderrichtung hintereinander angeordneten Reihen mehrerer rechteckiger Trichterschächte. Dabei werden die Trichterschächte durch zwei benachbarte vertikale Seitenwände gebildet, die seitlich geneigt sind und dadurch einen schmalen Auslaufspalt zum darunter angeordneten Formband bilden. Die benachbarten Trichterschächte liegen mit ihren Seitenwänden im Einlaufbereich oben seitlich dicht nebeneinander, so daß zwischen den Seitenwänden benachbarter Trichterschächte kein Einlaßspalt besteht. Dadurch werden durch die benachbarten Trichterschächte parallel nebeneinander beabstandete Streifen von orientierten Strands auf das Formband abgelegt. Da die einzelnen Reihen der Trichterschächte seitlich gegeneinander versetzt angeordnet sind, entsteht eine gleichmäßige orientierte Ablage von Strands auf dem Formband. Die Trichtervorrichtung erstreckt sich über die gesamte Breite des Formbandes und wird offensichtlich von einem gleich breiten Förderband mit Strands versorgt. Eine derartige Streustation ist ausschließlich zur Herstellung von OSB-Platten geeignet und kann in ihrer Streubreite und seitlichen Ausrichtung auch nicht variiert werden.

Der Erfindung liegt deshalb die Aufgabe zugrunde, eine Formstation zu schaffen, bei der der Gesamtmaterialstrom an unterschiedliche Streubreiten oder seitliche Auslenkungen anzupassen ist.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß durch ein einfaches Verändern der Abstände der Leitbleche zueinander im Grunde beliebige Streubreiten einstellbar sind. Dadurch kann auf einfache Weise auch eine Anpassung an unterschiedliche Breiten von Dosierbunkern, Fördervorrichtungen, Streuköpfen und Formbändern erreicht werden. Eine derartige Streubreitenverstellung kann vorteilhafterweise auch schon nach dem Dosierbunker vorgesehen werden, so daß der nachfolgenden Fördervorrichtung oder dem Streukopf bereits die vorgegebene Streubreite zugeführt wird. Hierdurch kann auf einfache Weise die Gleichmäßigkeit der Streuung verbessert werden, da bereits der Streuvorrichtung der Materialstrom in der auszustreuenden Breite zuführbar ist.

Die Erfindung hat weiterhin den Vorteil, daß durch die Verstellbarkeit mehrerer nebeneinanderliegender Teilströme die Materialanhäufung an den Plattenrändern durch die Aufteilung auf mehrere Teilströme auf ein Minimum reduzierbar ist. Auf diese Weise ist durch einfache Maßnahmen eine Materialanhäufung an den äußeren Seitenrändern vermeidbar, was gleichzeitig zu einer gleichmäßigen Streuung führt.

Eine besondere Ausführung der Erfindung hat den Vorteil, daß durch eine schräge Anordnung der Leitbleche zur Förderrichtung eine sehr ebene gleichmäßige Streuung der Späne oder des Faservlieses erreicht wird, da sich durch die Schrägstellung die Anhäufungen mit den Vertiefungen direkt unter den Leitblechen überlappen. Hierdurch ist insbesondere bei der Streuung von Faserplatten vorteilhafterweise eine nachfolgende höhenverstellbare Egalisierungswalze meist nicht mehr notwendig. Bei einer besonderen Ausführungsart der Erfindung, bei der die Fächerschurre breitenverstellbar ist, ist die Schrägstellung der Leitbleche auf vorteilhafte Weise dadurch erreichbar, daß die Fächerschurre beispielsweise hinten schmaler oder breiter als vorne eingestellt wird.

Eine weitere besondere Ausführung der Erfindung hat den Vorteil, daß durch ein selbsttätiges Verändern der Abstände aller Leitbleche zueinander oder ganzer Gruppen von Leitblechen im Grunde beliebige Streubreiten einstellbar sind. Dadurch kann ohne Produktionsunterbrechungen auch während des Betriebes die Streuung einer anderen Plattenbreite vorgenommen werden. Die besondere Ausführung der Erfindung hat weiterhin den Vorteil, daß durch die mechanischen Einstellmittel und die hebelartige Kopplung ein langjähriger, störungsfreier Einstellbetrieb möglich ist, obwohl durch erhebliche Belastungen durch Staub, Wärme und Chemikalien bei der Plattenproduktion schwierigste Umweltbedingungen herrschen. Dabei ist besonders vorteilhaft, daß durch die hebelartige Kopplung der Leitbleche durch eine einfache Linearbewegung weniger Hebelarme alle Leitbleche oder Gruppen von Leitblechen um gleichbleibende oder unterschiedliche Verstellwege in ihrer Gesamtbreite einstellbar sind.

Die Erfindung wird anhand eines Ausführungsbeispiels, das in der Zeichnung dargestellt ist, näher erläutert. Es zeigen:
- Fig. 1:: Eine Formstation mit einer Fächerschurre zwischen einem Dosierbunker und einem Streukopf;
- Fig. 2:: Eine Formstation mit einer Fächerschurre zwischen einem Dosierbunker und einem Formband;
- Fig. 3:: Eine Formstation mit einer Fächerschurre zwischen einem Dosierbunker und einer Dosierbandwaage;
- Fig. 4:: Eine Formstation mit einer Fächerschurre zwischen einer Dosierbandwaage und einem Streukopf;
- Fig. 5:: Ein Schnittbild der Fächerschurre bei einer Streubreitenverengung;
- Fig. 6:: Ein Schnittbild der Fächerschurre bei einer Streuprofilanpassung;
- Fig. 7:: Ein Schnittbild der Fächerschurre mit dreiteiligen Leitblechen;
- Fig. 8:: ein Schnittbild einer schematisch dargestellten Fächerschurre mit in Förder- oder Bandlaufrichtung gerade ausgerichteten Leitblechen;
- Fig. 9:: eine Draufsicht auf die Leitbleche der Fächerschurre von oben gesehen;
- Fig. 10:: eine Draufsicht auf die Leitbleche der Fächerschurre von unten gesehen;
- Fig. 11:: eine schematische Fächerschurre mit einer Breitenverstellung über ein Kniehebelgestänge;
- Fig. 12:: eine Fächerschurre in Seitenansicht mit einem höhenverstellbaren Kniehebelgestänge;
- Fig. 13:: eine schematische Fächerschurre mit einer Breitenverstellung durch ein Scherengittergestänge, und
- Fig. 14:: eine schematische Fächerschurre mit einer Breitenverstellung über ein Gelenkhebelgestänge.

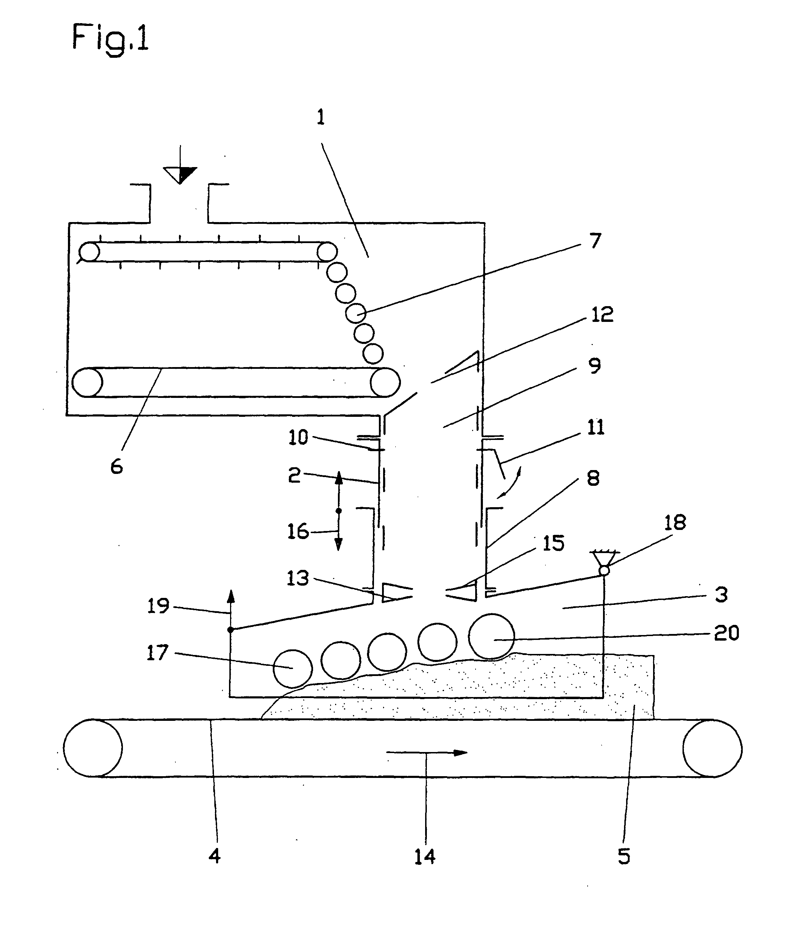

In Fig. 1 der Zeichnung ist eine Formstation mit einem Dosierbunker 1, einer Fächerschurre 2 mit Streubreitenverstellung, einer Streuvorrichtung 3 und einem Formband 4, auf das das Materialvlies 5 aus rieselfähigem Streugut aufgestreut wird, dargestellt.

Im Dosierbunker 1 wird das rieselfähige Streugut zwischengespeichert und auf eine vorgesehene Austragsbreite verteilt und nach unten über die gesamte Breite des Dosierbunkers 1 ausgetragen. Als rieselfähige Streugüter sind in erster Linie lignozellulose- und/oder zellulosehaltige Teilchen unterschiedlicher Größe wie Fasern, Späne und dergleichen vorgesehen. Zur Herstellung von Platten werden meist mit Bindemitteln versehene Holzspäne oder Holzfasern verwendet, die mit Hilfe eines Bodenbandes 6 und Austragswalzen 7 aus dem Dosierbunker 1 kontinuierlich ausgetragen werden. Dabei besitzt der Dosierbunker 1 eine Breite, die mindestens der maximalen Plattenbreite entspricht, die auf der Anlage produziert werden sollen.

Die Späne oder Fasern werden aus dem Dosierbunker 1 ausgetragen und über die gesamte Breite über Förder- und/oder Streuvorrichtungen 3 auf das Formband aufgestreut. Allerdings werden in der Praxis auch verschiedene Plattenbreiten gewünscht, die bis zu ca. 30% kleiner sein können als die größtmögliche Plattenbreite. Deshalb ist nach dem Austrag aus dem Dosierbunker 1 eine breitenverstellbare Fächerschurre 2 angeordnet, durch die der Streuvorrichtung, die als Streukopf 3 ausgebildet ist, das Späne- oder Fasermaterial in der gewünschten Breite zugeführt wird.

Die Fächerschurre 2 besteht aus einem rechteckigen Gehäuseteil 8 in dem mehrere parallele Leitbleche 9 angeordnet sind. Die Leitbleche 9 sind längs zur Förderrichtung ausgerichtet und unterteilen den Förderstrom in mehrere Parallelströme. Dadurch entstehen mehrere relativ gleichmäßige Teilströme, die einzeln zu beeinflussen sind, um eine optimale Verteilung auf dem Formband 4 zu erreichen. Um eine derartige Beeinflussung insbesondere in der Breite zu erzielen, sind mindestens so viele Leitbleche 9 vorzusehen, daß mindestens drei Teilströme entstehen. Da in der Praxis Plattenbreiten bis ca. 3 bis 4 Metern üblich sind, haben sich Fächerschurren 2 von ca. acht bis dreißig Parallelströmen als vorteilhaft erwiesen. Dazu enthält die Fächerschurre 2 nach Fig. 1 ca. neun bis einunddreißig parallel angeordnete Leitbleche 9, die in Richtung des Förderstromes ausgerichtet sind. Die Förderrichtung ist dabei vertikal, um die Materialteilchen vom oben liegenden Dosierbunker 1 auf den darunter angeordneten Streukopf 3 zu fördern. Die Fächerschurre 2 kann aber auch schräg zur vertikalen Richtung angeordnet sein, um gleichzeitig eine horizontale Förderkomponente zu erzielen. Die Fächerschurre kann gleichzeitig auch schräg zur Förderrichtung ausgerichtet sein, um den Förderstrom auch seitlich umzulenken.

Die Leitbleche 9 sind gegenüber einem ortsfesten Gehäuseteil 8 verschwenkbar oder verschiebbar befestigt, so daß die Abstände der Leitbleche 9 voneinander kontinuierlich oder stufenweise verstellbar sind. Dadurch sind die Teilströme mindestens an der Materialaustrittsstelle aus der Fächerschurre 3 in der Breite veränderbar.

Nach Fig. 1 der Zeichnung sind die Leitbleche 9 in ihrem oberen Bereich 10 schwenkbar aufgehängt und mittels eines schematisch dargestellten Hebelarms 11 gegenüber der Vertikalen einzeln verschwenkbar. Durch Verbindung mehrerer Schwenkhebel 11 kann jeweils ein Teil der Leitbleche 9 zur Mitte hin verschwenkt werden, so daß dadurch die Breite des Förderstromes über die gesamte Breite gleichmäßig oder mit unterschiedlichen Verstellwinkeln verringert wird.

Die Leitbleche 9 können aber auch quer verschiebbar angeordnet werden, so daß durch eine seitliche Verschiebung der Bleche 9 mindestens im Bereich der Materialaustrittsstelle die Förderbreite kontinuierlich oder diskontinuierlich veränderbar ist. Dadurch wird in erster Linie erreicht, daß bei einer Verringerung der Förderbreite der Förderstrom auch über die gesamte Breite und nicht nur an den Randbereichen beeinflußbar ist.

Die Leitbleche 9 sind als flache einteilige Bleche ausgebildet, die sowohl oben im Bereich der Materialausgabestelle der Fächerschurre 2 als auch unten an der Materialaustrittsstelle gegenüber der Horizontalen abgeschrägt sind. Im oberen Bereich dient die Abschrägung 12 zur Verbesserung der Aufteilung auf die Teilströme und damit der Verhinderung von Materialanhäufungen. Diese Abschrägungen 12 können sowohl im Winkel als auch in der Höhe der Leitbleche 9 unterschiedlich sein, um den kontinuierlichen Materialstrom zu verbessern. Die Abschrägung 12 kann gerade, gewölbt, sägezahnförmig und/oder in davon abgewandelten Formgebungen ausgebildet sein. Für leicht rieselfähige Streugüter können die Leitbleche 9 aber auch rechtwinkelig oder quadratisch sein.

Die untere Schräge 13 der Leitbleche 9 kann sowohl in Förderrichtung abfallend oder ansteigend sein. Bei leicht anhaftenden und faserigen Streugütern hat sich eine wechselseitige Abschrägung 13, 15 der benachbarten Leitbleche 9 als vorteilhaft erwiesen, um ein Anhaften an der unteren Kante 13, 15 zu vermeiden und einen kontinuierlichen, gleichmäßigen Förderstrom zu erreichen. Die untere Schräge 13, 15 der Leitbleche 9 kann je nach Beschaffenheit des Streuguts als gerade Kante mit unterschiedlichen Anstiegswinkeln, als gewölbte Kante, als sägezahnförmige Kante und/oder in davon abgewandelten Formen ausgebildet sein. Die Leitbleche 9 können auch mit Schwingungserregern gekoppelt sein, so daß sie mit einer vorgegebenen Amplitude quer zur Förderrichtung in Schwingung versetzbar sind, wodurch Materialanhaftungen an den Blechen 9 vermieden werden.

Das Gehäuse 8 der Fächerschurre 2 ist teleskopartig ausgebildet, so daß die Fächerschurre 2 auch in Längsrichtung 16, also vertikal verstellbar ist. Dies ist bei höhenverstellbaren Streuköpfen 3 vorteilhaft, die vorzugsweise beim Streuen von MDF-Platten (mittelharte Faserplatten) und HDF (High Dencity Fiberboard) eingesetzt werden. Bei größeren Streuhöhenänderungen können auch die Leitbleche 9 teleskopartig ausgebildet sein, um auch diese an die veränderte Streuhöhe anzupassen.

Unterhalb der Fächerschurre 2 ist als Streuvorrichtung ein Streukopf 3 mit mehreren parallel und quer zur Förderrichtung 14 angeordneten Streuwalzen 17 befestigt. Die Streuwalzen 17 sind längs zur Förderrichtung 14 in horizontal ansteigender Linie angeordnet, um eine gleichmäßige Streuung und eine Höhenbegrenzung zu gewährleisten. Die Streuwalzen 17 sind dabei unmittelbar unterhalb der Fächerschurre 2 vorgesehen und fördern die rieselfähigen Güter vorzugsweise die beleimten Holzfasern entgegen der Förderrichtung 14. Durch die Rotation der Streuwalzen 17 werden gleichzeitig die Holzfasern auf das darunter kontinuierlich laufende Formband 4 als Faservlies 5 aufgestreut und einer nachfolgenden Vorpressstation oder einer Plattenpresse zugeführt.

Da die Streuwalzen 17 im wesentlichen nur das Material ausstreuen, was oben auf ihnen aufgegeben wird, streuen sie im wesentlichen auch nur in der Breite aus, in der der Förderstrom durch die Fächerschurre vorgegeben wird. Eine derartige Streustation 3 ist in erster Linie zur Streuung eines Faservlieses für HDF- und MDF-Platten vorgesehen, dessen Streuhöhen von ca. 6 bis 160 cm variieren können. Deshalb ist der Streukopf 3 höhenverstellbar angeordnet. Der Streukopf 3 ist an einem ortsfesten Drehpunkt 18 gelagert und wird durch eine nicht im einzelnen dargestellt Hubvorrichtung 19 auf einfache Weise in der Höhe verstellt. Bei größeren Hubbereichen ist auch eine parallelartige Vierpunkt-Höhenverstellung möglich.

In Förderrichtung 14 vor den Streuwalzen 17 sind noch zwei Rückstreifwalzen 20 vorgesehen, die das Faservlies 5 in einer vorgegebenen Streuhöhe begrenzen und egalisieren. Auch diese Höhe ist durch die Verschwenkung des Streukopfes 3 veränderbar.

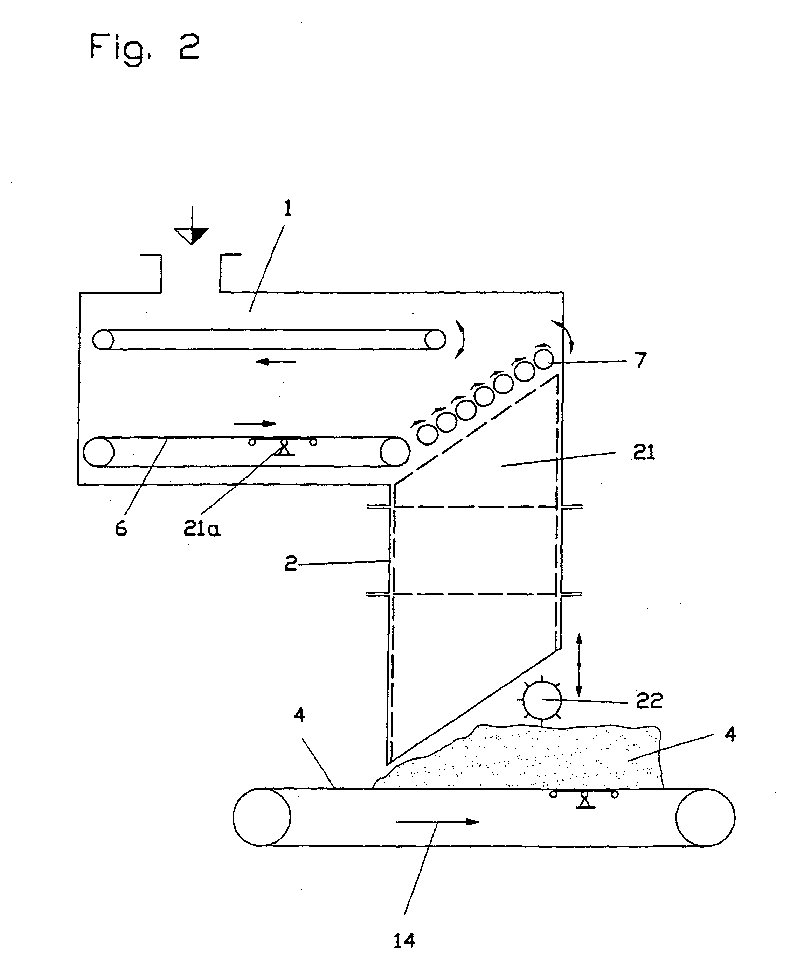

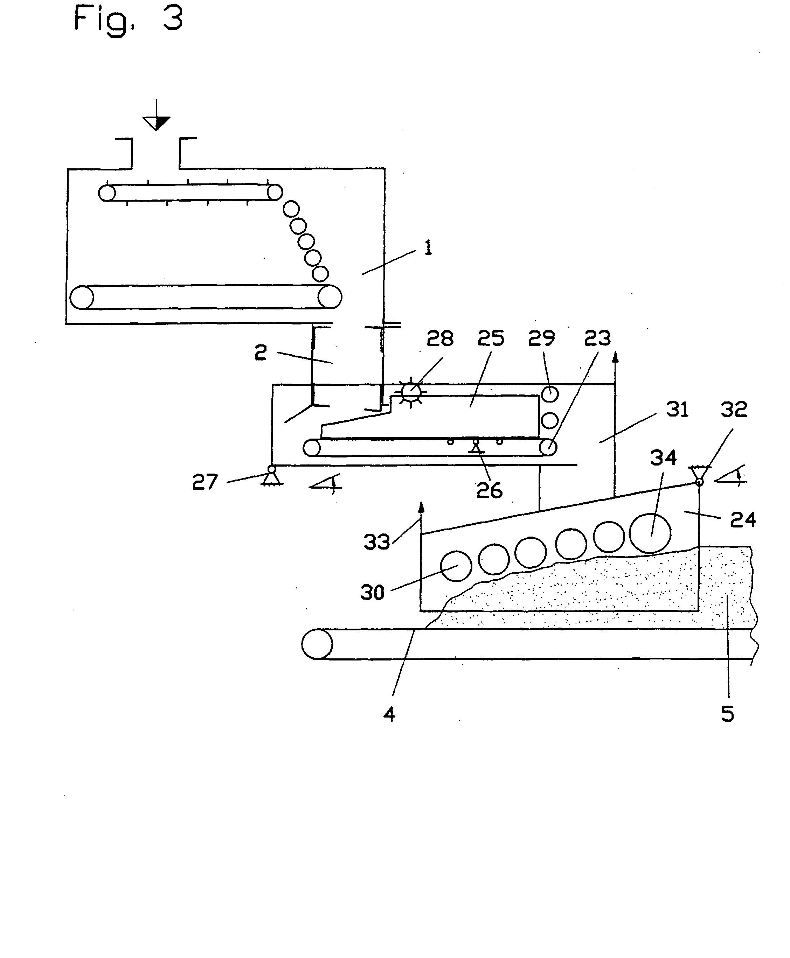

Die Fig. 2 der Zeichnung zeigt eine Streustation, insbesondere zum Streuen von beleimten Holzfasern für HDF- und MDF-Platten. Dabei ist die Fächerschurre 2 sowohl als Förder- und Streuvorrichtung ausgebildet, durch die das Faservlies 5 unmittelbar auf das Formband 4 aufgebracht wird. Dazu sind sowohl die im Dosierbunker 1 befindlichen Austragswalzen 7 in ihrer Drehzahl als auch im Einstellwinkel verstellbar. Da gleichzeitig im Bodenband 6 noch eine Bandwaage 21a integriert ist, läßt sich die Austragsförderstärke genau steuern, so daß eine vorgegebene Streumasse direkt auf das Formband 4 streubar ist. Die Bandwaage kann auch im Formband integriert werden, um die Streumenge auf dem Formband 4 zu streuen. Die Fächerschurre 2 ist dabei durch teleskopartige Leitbleche 21 in der Höhe verstellbar, so daß hierdurch auch auf einfache Weise große Faserhöhenbereiche von ca. 6 bis 160 cm streubar sind. Dabei sind die Leitbleche 21 dreiteilig ausgebildet, die insbesondere durch eine Parallelstellung im Bereich des Formbandes 4 eine saubere senkrechte Kantenstreuung ermöglichen und dies bei einer variablen Breitenverstellung. Zusätzlich ist noch eine Rückstreifwalze 22 vorgesehen, die so verstellbar ist, daß die vorgegebene Faservliesoberfläche vergleichmäßigt wird. In Fig. 3 der Zeichnung ist die Fächerschurre 2 zwischen dem Dosierbunker 1 und einer zusätzlichen Fördervorrichtung 23, die das Streugut einem Streukopf 24 zuführt. Die zusätzliche Fördervorrichtung 23 ist dabei als Dosierbandwaage ausgebildet, die kontinuierlich eine regelbare Fördermenge in den Streukopf 24 fördert, so daß je nach Plattendicke und -breite vom Streukopf 24 eine vorgebbare Menge auf das Formband 4 streubar ist. Dazu ist die Fächerschurre 2 wie nach Fig. 1 und 2 unterhalb des Dosierbunkers angeordnet und in der Förderbreite verstellbar. Die Fächerschurre 2 fördert direkt auf die kontinuierlich angetriebene Dosierbandwaage 23. Die Dosierbandwaage 23 ist dabei in einer Breite vorgesehen, die mindestens der maximalen Streubreite entspricht. Die Dosierbandwaage 23 wird in der Breite durch Seitenwände 25 an jeder Außenkante begrenzt, die entsprechend der Streubreite einstellbar ausgestaltet sind. Dabei folgt die Breiteneinstellung der Seitenwände 25 der Breiteneinstellung der Fächerschurre 2, indem die Seitenwände 25 zueinander oder auseinander bewegbar sind. Dadurch sind bereits auf der Dosierbandwaage 23 saubere Seitenkanten aufgestreut, die eine exakte Breitenstreuung auf das Formband 4 ermöglichen. Dabei ist durch die Wägeeinrichtung 26 eine genaue Steuerung der Streumenge möglich, die der gewünschten Plattendicke und -breite entspricht. Insbesondere kann durch die vor dem Streukopf 24 befindliche Dosierbandwaage 23 eine rasche Förderstärkenänderung bereits vor dem Ausstreuen erfolgen, sofern sich die Materialdichte oder -zusammensetzung ändert, so daß stets ein vorgegebenes Vliesgewicht genau einhaltbar ist.

Die zusätzliche Dosierbandwaage 23 ist einseitig über ein Lagerelement 27 drehbar gelagert, um bei großen Streuhöhenunterschieden, wie bei der Herstellung von Holzfaserplatten, die Förderhöhe verstellbar zu gestalten. Der Förderstrom wird zusätzlich durch eine höhenverstellbare Egalisierungswalze 28 vergleichmäßigt. Am Ende der zusätzlichen Fördervorrichtung 23 sind zwei weitere Streuwalzen 29 vorgesehen, die daß Streugut auf einen darunter angeordneten Streukopf 24 fördern.

Der Streukopf 24 enthält mehrere quer angeordnete Streuwalzen 30, die das Streugut auf das darunter verlaufende Formband 4 in einer vorgegebenen Höhe und Breite aufstreuen. Die vorgegebene Breite ergibt sich weitgehend schon aus der herangeführten Materialbreite auf der Dosierbandwaage 23, die durch die Fächerschurre 2 vorgegeben war. Da der zum Streukopf 24 gerichtete senkrechte Förderschacht 31 auf die maximale Streubreite bemessen ist, könnten in ihm in der Breite verstellbare Seitenbleche vorgesehen werden, so daß die Förderbreite auch dadurch auf die gewünschte Streubreite einstellbar ist.

Der Streukopf 24 ist an einem oberen Lagerelement 32 drehbar gelagert, so daß dieser durch einen nicht dargestellten Hubmechanismus 33 in der Höhe verstellbar ist. Dadurch ist insbesondere eine exakte Streuhöheneinstellung steuerbar, die bei der Streuung von Faserplatten vorteilhaft ist. Durch eine vorgesehene Rückstreifwalze 34 ist somit eine vorgesehene Materialvlieshöhe exakt streubar, sofern der Streukopf 24 in der Höhe entsprechend eingestellt ist. Das ausgestreute Faservlies 5 wird dann durch das kontinuierlich laufende Formband 4 einer nachfolgenden Vor- oder Plattenpresse zugeführt.

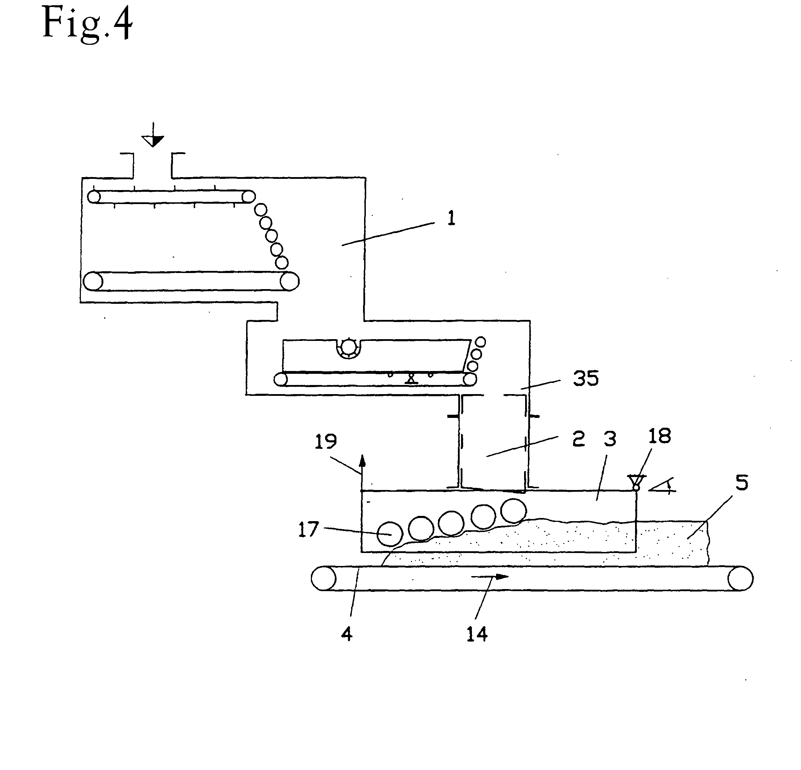

Die Fig. 4 zeigt eine Streustation bei der unterhalb des Dosierbunkers 1 eine Dosierbandwaage 23 angeordnet ist, an deren Auslauföffnung 35 eine Fächerschurre 2 vorgesehen ist, die den Förderstrom in vorbestimmbarer Breite einem Streukopf 3 als Streuvorrichtung zuführt. Der Dosierbunker 1 und die Dosierbandwaage 23 entsprechen denen zu Fig. 3 beschriebenen Teilen. Allerdings ist hier vertikal zwischen der Dosierbandwaage 23 und oberhalb des Streukopfes 3 die Fächerschurre 2 vorgesehen.

Die Fächerschurre 2 ist hierbei vergleichbar ausgebildet wie die bereits zu Fig. 1 beschriebene. Im Betriebsablauf werden durch die Fächerschurre 2 die rieselfähigen Güter, wie insbesondere beleimte Holzfasern, in vorgesehener Breite über mehrere Parallelströme in den Streukopf 3 befördert. Durch die quer zur Förderrichtung 14 parallel nebeneinander angeordneten Streuwalzen 17 wird auf das Formband 4 ein Faservlies 5 in vorgegebener Breite aufgestreut und zur Vor- oder Plattenpresse befördert. Der Streukopf 3 ist einseitig über ein Drehlagerelement 18 drehbar gelagert, so daß er über eine nicht dargestellte Hubeinrichtung 19 in der Höhe verstellbar ist.

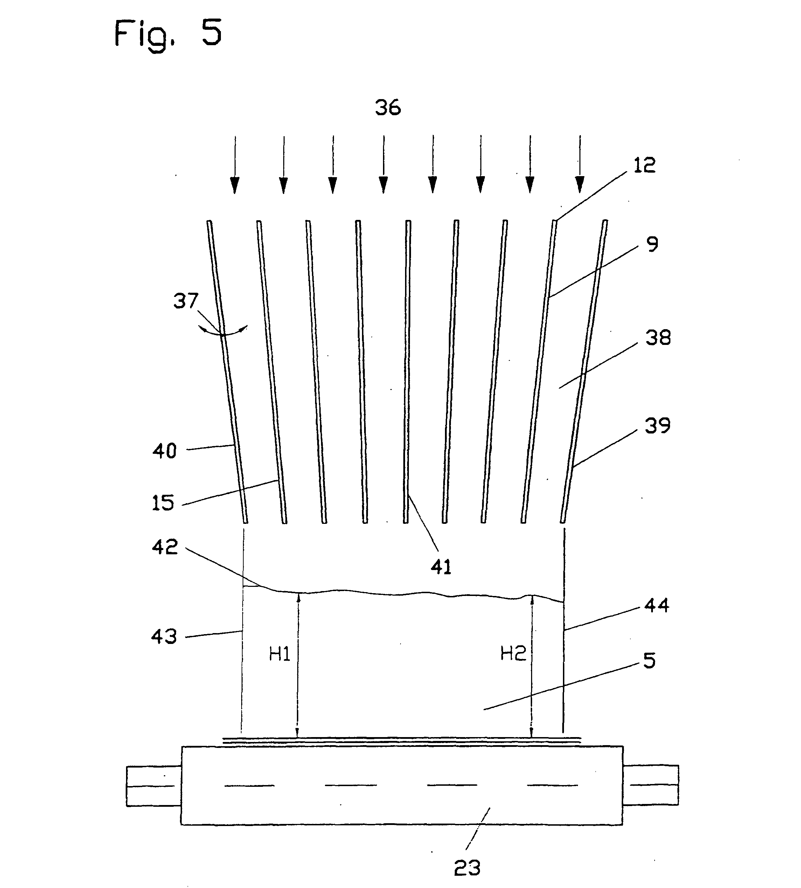

In Fig. 5 der Zeichnung ist eine Fächerschurre 2 als Schnittbild dargestellt. Dabei geben die oberen Pfeile 36 die Materialaufgabe in Förderrichtung schematisch wieder, während sich unterhalb der Fächerschurre 2 eine Bandwaage 23 als Fördervorrichtung befindet. Die Fächerschurre 2 besteht im wesentlichen aus einigen parallelgestellten Leitblechen 9, die alle in Förderrichtung 36 verlaufen. Die Leitbleche 9 sind im oberen Bereich 37 schwenkbar aufgehängt, so daß sie einzeln oder in Gruppen verstellbar sind. Bei längeren Fächerschurren 2 können die Leitbleche 9 auch durch mehrere Lagerpunkte 37 mit einem ortsfesten Gehäuse 8 oder Rahmenteil verbunden sein. Die Leitbleche 9 können auch seitlich verschiebbar angeordnet werden, um die Abstände zwischen ihnen stufenlos oder in vorgebbaren Stufen zu verändern.

In Fig. 5 der Zeichnung sind neun Leitbleche 9 vorgesehen. In der Praxis haben sich für Förderbreiten bis ca. 3 bis 4 m neun bis dreißig Leitbleche als vorteilhaft erwiesen. Im Einzelfall können beispielsweise für die Streuung von Spanplatten auch bis zu fünfzig Leitbleche 9 vorgesehen werden. Die dargestellte Fächerschurre 2 ist so konzipiert, daß bei maximaler Förderbreite alle Leitbleche 9 parallel zueinander ausgerichtet sind, so daß der Gesamtmaterialstrom in etwa acht gleichgroße Teilströme 38 aufgeteilt wird. Da in der Praxis Streubreitenänderungen von bis zu ca. 30% notwendig sein können, müssen die beiden Randleitbleche 39, 40 bis ca. 60 cm nach innen verstellbar sein. Deshalb sind beide Leitblechgruppen jenseits des mittleren Leitbleches 41 zum mittleren Leitblech 41 verschwenkbar, um die Förderbreite entsprechend der gewünschten Plattenbreite zu verstellen. Dabei hat sich in der Praxis als vorteilhaft erwiesen, daß alle Leitbleche so verschwenkt oder verschoben werden, daß an der Materialaustrittsstelle gleiche Abstände der Leitbleche 9 zueinander entstehen, um über die gesamte Breite eine verhältnismäßig gleiche Materialverteilung zu erzielen. Durch eine derartige Breitenverstellung wird eine gleichmäßige Materialverteilung 42 auf dem Förderband 23 erreicht, das zu einer kontinuierlichen Plattenqualität über die gesamte Breite führt. Die Leitbleche 9, 39, 40, 41 können aber auch so angeordnet werden, daß sie nicht nur nach innen, sondern auch oder nur nach außen verschiebbar sind. Dies kann dann vorteilhaft sein, wenn aus einem verhältnismäßig schmalen Dosierbunker 1 breitere Platten streubar sein sollen.

Die Leitbleche 39, 40 an den beiden Seitenrändern sind bis zum Förderband 23 mit Seitenwänden 43, 44 verbunden, die synchron mit den Leitblechen 39, 40 verschiebbar sind. Dadurch wird insbesondere bei großen Streuhöhen 42 von ca. bis zu 2 m eine saubere Abschlußkante gebildet, die eine exakte Streubreite auf dem Formband 4 ermöglicht. Dies ist insbesondere dann vorteilhaft, wenn entsprechend den Ausbildungen nach Fig. 2 der Zeichnung direkt auf das Formband 4 gefördert wird.

Die Leitbleche 9, 39, 40, 41 sind als flache gerade Bleche ausgebildet, die aus einem dünnen Stahlblech gefertigt sind. Die Bleche 9, 39, 40, 41 können aber auch quer zur Längs- oder Förderrichtung 36 eine wellblechartige Struktur besitzen, um eine Längsführungsfunktion insbesondere bei schrägen Fächerschurren 2 zu erzielen. Die Struktur kann aber auch eine zickzackförmige, eckige oder davon abgewandelte Formgebung aufweisen, die alle auch noch zusätzliche Stabilisierungsfunktionen in Längsrichtung wahrnehmen. Die Leitbleche 9, 39, 40, 41 können an ihren Berührungsflächen gehärtet oder mit härteren Oberflächenbeschichtungen versehen sein, um einen Abrieb zu vermindern. So sind auch Leitbleche aus anderen Metallen, Kunststoffen oder Verbundstoffen einsetzbar. Die Oberflächen können aber auch mit schwer anhaftenden Oberflächenbeschichtungen aus Kunststoff oder vergleichbaren Werkstoffen versehen werden, um insbesondere Schmutz- und Bindemittelanhaftungen zu vermeiden. Die Leitbleche 9 können aber auch mit einem Schwingungserreger gekoppelt werden, der Anhaftungen oder Verschmutzungen löst oder verhindert.

Die Leitbleche 9, 39, 40, 41 sind rechtwinkelig und in Längsrichtung 36 gleich lang ausgebildet. Im Aufgabe- und Auslaufbereich haben sich auch schräg angeordnete Kanten 12, 13, 15 als vorteilhaft erwiesen. Insbesondere werden dadurch Materialstauungen im Aufgabebereich und im Auslaufbereich der Fächerschurre 2 wirkungsvoll vermieden. Diese Aufgabe- 12 und Auslaufkanten 13, 15 können auch sägezahnförmig, gewölbt oder in davon abgewandelten Formgebungen ausgebildet sein. So hat es sich auch als vorteilhaft erwiesen, insbesondere im Auslaufbereich die Länge der Leitbleche verschieden zu gestalten, um ein gutes Abreißverhalten zu ermöglichen, wodurch ein kontinuierlicher Materialstrom gewährleistet wird.

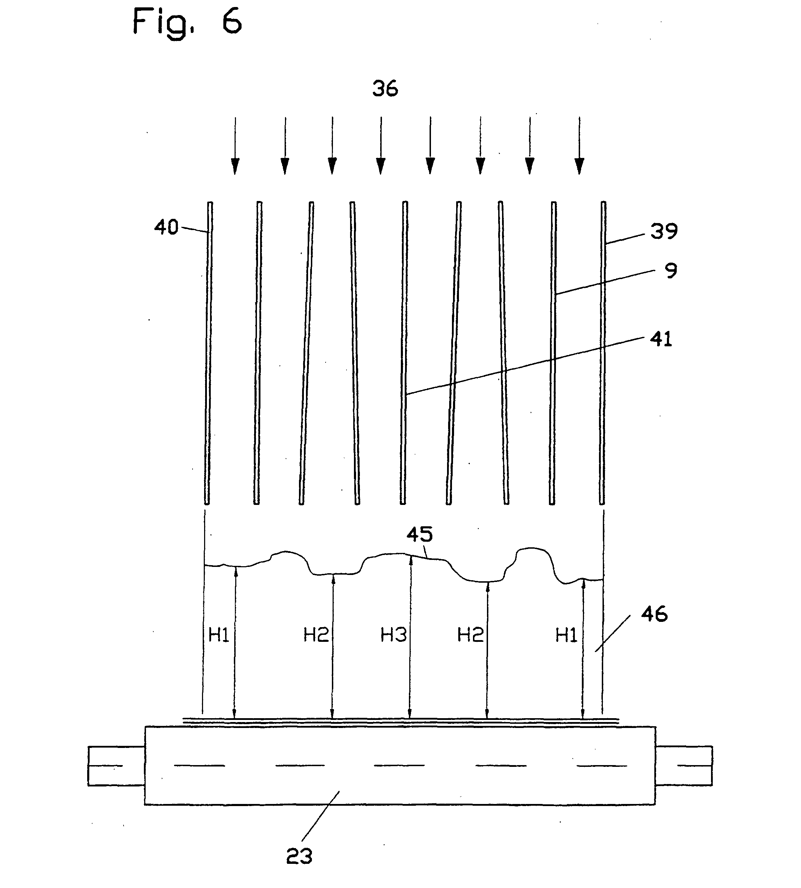

Eine weitere Ausgestaltung ist in Fig. 6 der Zeichnung dargestellt, nach der alle Leitbleche 9, 39, 40, 41 seitlich unabhängig voneinander ausrichtbar sind. Dabei ist jedes Leitblech 9, 39, 40, 41 mittels eines eigenen Schwenkantriebs 11 oder Verschiebeantriebs einzeln steuerbar, so daß insbesondere ein vorgegebenes Höhenprofil 45 mit unterschiedlichen Materialhöhen 46 auf dem Förderband 23 oder Formband 4 ablegbar ist. Dies ist immer dann vorteilhaft, wenn Platten mit unterschiedlichen Dichten oder Profilen hergestellt werden sollen. Damit kann auch eine Anpassung an bestimmte Preßcharakteristiken der nachfolgenden Preßstation vorgenommen werden. Weiterhin kann mit einer derartigen Einzelausrichtung auch eine gleichzeitige einseitige seitliche Auslenkung der Förderstromes gesteuert werden.

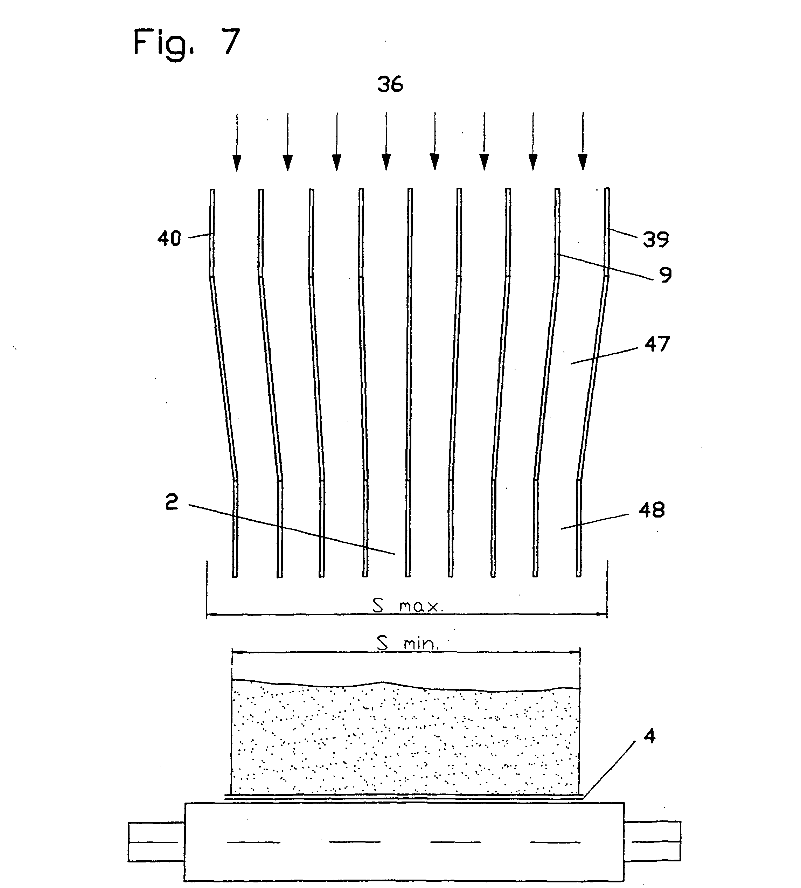

In Fig. 7 der Zeichnung ist eine Fächerschurre 2 mit in Längsrichtung dreiteiligen Leitblechen 9, 39, 40 dargestellt, die gelenkig miteinander verbunden sind. Diese Leitblechanordnung bewirkt eine Querschnittsveränderung lediglich im mittleren Bereich 47, so daß insbesondere in den verstopfungsgefährdeten Übergangsbereichen ein guter Materialfluß erreichbar ist. Gleichzeitig wird hierdurch im Austrittsbereich 48 ein vertikaler Materialaustritt erreicht, der eine saubere Kantenbildung auf dem darunterliegenden Form- 4 oder Förderband 23 gewährleistet. Die Leitbleche 9, 39, 40 können auch aus mehr als drei Leitblechteilen bestehen, so daß auch abgerundete Materialverengüngen steuerbar sind. Statt der mehrteiligen Leitbleche können auch flexible Leitbleche eingesetzt werden, die einen kontinuierlicheren Materialtransport in Förderrichtung 36 bewirken. Die Leitbleche können in ihrer Länge auch teleskopartig ausgebildet sein, so daß die Fächerschurre 2 auch in der Länge verstellbar ist, was insbesondere bei unterschiedlichen Streuhöhen vorteilhaft ist.

Bei einer speziellen Ausbildung der Fächerschurre 2 kann die Fächerschurre auch so ausgebildet sein, daß diese nur an eine einzige vorgegebene Breitenverringerung oder -vergrößerung angepaßt wäre. Dazu müßten die Leitbleche 9 fest in dem Gehäuse- oder Rahmenteil angeordnet sein. Damit wäre auf einfache Weise eine vorgegebene Anpassung an eine einzige festgelegte Förder- oder Streubreitenänderung möglich.

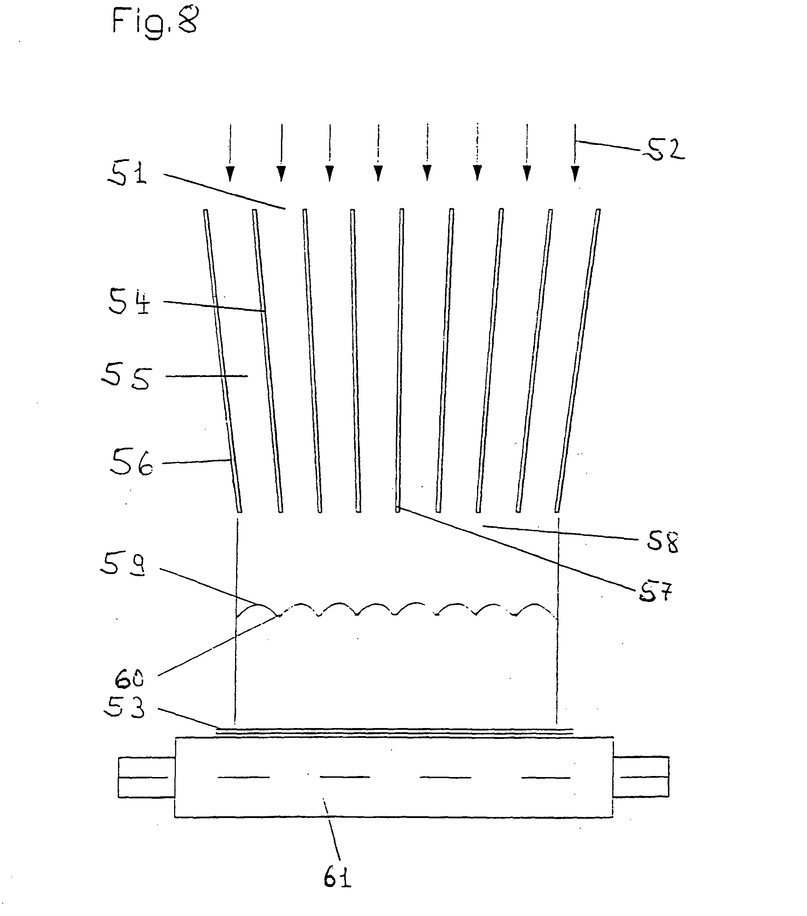

In Fig. 8 der Zeichnung ist eine Fächerschurre 51 mit in Förder- oder Bandlaufrichtung gerade ausgerichteten Leitblechen als Schnittbild schematisch dargestellt. Dabei geben die oberen Pfeile die Materialaufgabestelle 52 aus dem nicht dargestellten Dosierbunker schematisch wieder, während sich unterhalb der Fächerschurre 51 ein Formband 53 mit einer Antriebswalze 61 als Fördervorrichtung befindet. Die Fächerschurre 51 ist breitenverstellbar und besteht im wesentlichen aus mehreren quer zur Vertikalen verstellbaren Leitblechen 54, die alle in Förder- oder Bandlaufrichtung gerade verlaufen. Die Leitbleche 54 sind im oberen Bereich schwenkbar aufgehängt, so daß sie einzeln oder in Gruppen quer zur Vertikalen verstellbar sind. Bei längeren Fächerschurren 51 können die Leitbleche 54 auch durch mehrere Lagerpunkte mit einem ortsfesten Gehäuseoder Rahmenteil verbunden sein. Die Leitbleche 54 können auch seitlich verschiebbar angeordnet werden, um die Abstände zwischen ihnen stufenlos oder in vorgebbaren Stufen zu verändern.

Bei der dargestellten Fächerschurre 51 sind neun Leitbleche 54 vorgesehen. In der Praxis haben sich Förderbreiten von ca. 3 bis 4 m mit neun bis dreißig Leitblechen 54 als vorteilhaft erwiesen. Die dargestellte Fächerschurre 51 ist so konzipiert, daß bei maximaler Förderbreite alle Leitbleche 54, 56, 57 parallel zueinander ausgerichtet sind, so daß der Gesamtmaterialstrom in etwa acht gleich große Teilströme 55 aufgeteilt wird. Da in der Praxis Streubreitenänderungen von bis zu ca. 30 % notwendig sein können, müssen die beiden Randleitbleche 56 nach innen verstellbar sein. Deshalb sind beide Leitblechgruppen jenseits des mittleren Leitblechs 57 zum mittleren Leitblech 57 verschwenkbar, um die Förderbreite entsprechend der gewünschten Plattenbreite symmetrisch zur Bandmitte zu verstellen. Dabei hat sich in der Praxis als vorteilhaft erwiesen, daß alle Leitbleche 54, 56 so verschwenkt oder verschoben werden, daß an der Materialaustrittsstelle 58 gleiche Abstände der Leitbleche 54, 56, 57 zueinander entstehen, um über die gesamte Breite eine verhältnismäßig gleiche Materialverteilung zu erzielen. Durch eine derartige Breitenverstellung wird eine Materialverteilung auf dem Formband 53 erreicht, die in der Mitte der Teilströme 55 über leichte Materialanhäufungen 59 und unterhalb der Leitbleche 54, 56, 57 über geringe Vertiefungen 60 verfügt.

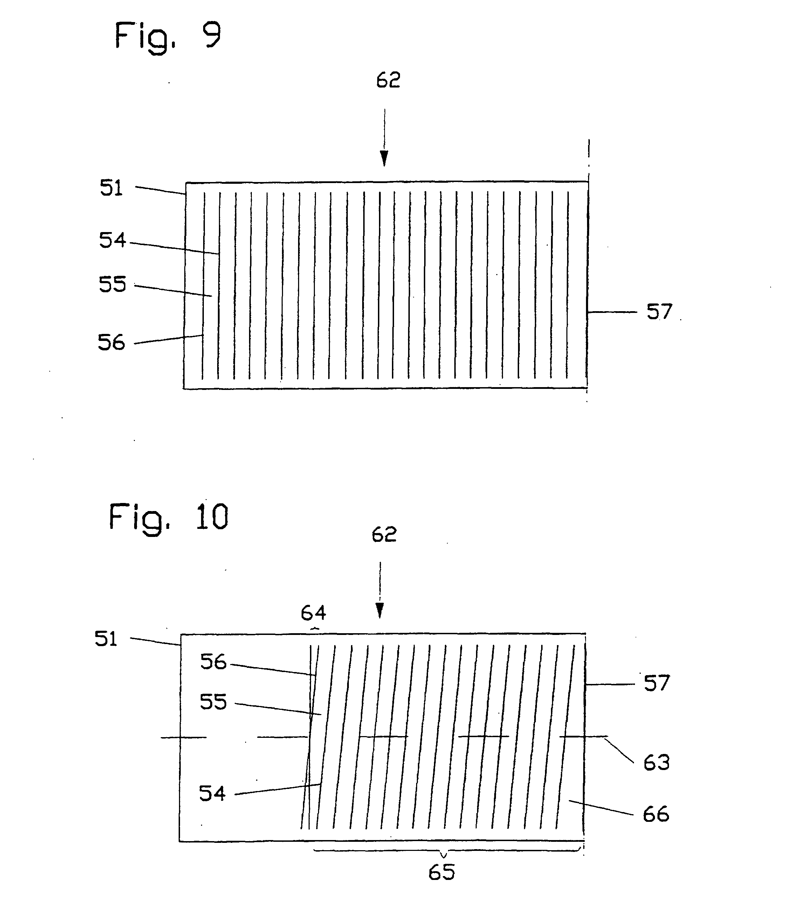

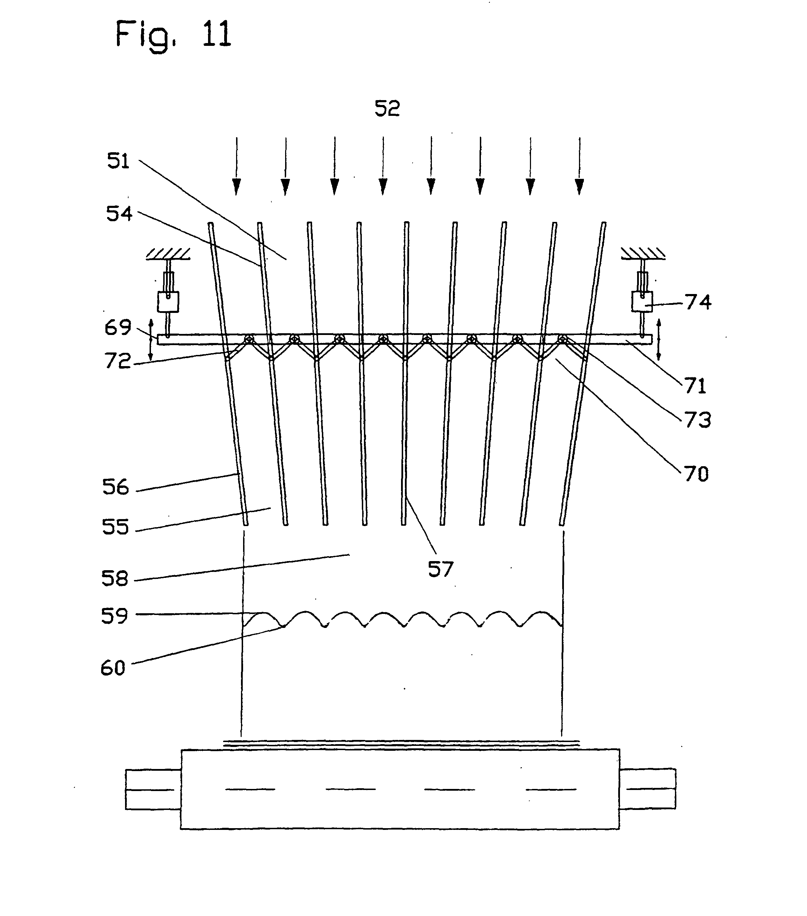

Bei der erfinderischen Ausführungsform der Fächerschurre 51 werden die Erhebungen 59 und Vertiefungen 60 durch eine Schrägstellung der Leitbleche 54, 56, 57 oder von Leitblechgruppen am Austrittsende 58 der Fächerschurre 51 egalisiert. Diese erfinderische Anordnung der Leitbleche 54, 56, 57 ist aus Fig. 9 und 10 der Zeichnung schematisch ersichtlich. In Fig. 9 der Zeichnung ist die Draufsicht auf die Leitbleche 54, 57 der Fächerschurre nach Fig. 8 von oben dargestellt, und zwar nur eine Hälfte der spiegelbildlich ausgebildeten Fächerschurre 51. Die dargestellte Fächerschurrenhälfte besitzt eine Breite von etwa 150 cm, wobei die Leitbleche 54, 56, 57 in einem Abstand von ca. 10 cm voneinander angeordnet sind. Diese Fächerschurre 51 ist geeignet für Plattenbreiten bis ca. 300 cm. Alle Leitbleche 54, 56, 57 sind in Förder- oder Bandlaufrichtung 62 ausgerichtet, so daß die aufgestreuten beleimten Späne oder Fasern zu parallelen Teilströmen 55 aufgeteilt werden und durch die Schwerkraftwirkung nach unten auf das Formband 53 gelangen. Um die Anhäufung 59 in der Mitte und die Vertiefungen 60 an den Rändern der Teilströme 55 in Form eines Spargelackers auf dem Formband zu vermeiden, werden die Teilströme 54 durch die Leitbleche 54, 56, 57 der Fächerschurre 51 teilweise seitlich ausgelenkt, so daß sich die Anhäufungen 59 mit den Vertiefungen 60 überlappen, so daß eine ebene gleichmäßige Streuung auf dem Formband 53 entsteht.

Diese seitliche Auslenkung der Teilströme 55 ist in Fig. 10 der Zeichnung schematisch dargestellt, die den Austrittsbereich 58 der erfinderischen Ausführung der Fächerschurre 51 zeigt. Gleichzeitig ist in Fig. 10 der Zeichnung eine Breitenverstellung an der Materialaustrittsstelle 58 um etwa 25% dargestellt, so daß die Austrittsbreite der Fächerschurre 51 nur noch ca. 220 cm bzw. 110 cm pro dargestellter Fächerschurrenhälfte beträgt. Dabei sind die Leitbleiche 54, 56, 57 zur Förder- oder Bandlaufrichtung 62 schräg oder seitlich versetzt angeordnet, wobei sich in der Praxis ein Seitenversatz von etwa der Breite eines Teilstromes 55 als vorteilhaft herausgestellt hat.

Eine derartige Schrägstellung oder Seitenversatz läßt sich einfach dadurch erreichen, daß die Streubreite der Fächerschurre 51 in Förderrichtung 62 hinten schmaler eingestellt wird als vorne. Die Breitenverstellung erfolgt vorteilhafter Weise immer symmetrisch zum Mittelleitblech 57, so daß eine gleichmäßige Streuung auch bei kleineren Streubreiten erreichbar ist. Bei der dargestellten Schrägstellung der Leitbleche 54, 56 zur Förderrichtung 62 werden die Leitbleche 54, 56 einer Fächerschurrenhälfte gegenüber einer Mittelfläche 63 um einen halben Teilungsabstand 64 verschwenkt. Dabei wird die Fächerschurre 51 gegenüber einer mittleren Breite 65 an der Mittelfläche 63 in Förderrichtung 62 vorne etwas breiter und hinten etwas schmaler eingestellt. Dadurch bleiben im Grunde alle Teilströme 55 gleich breit, nur gegenüber dem Mittelleitblech 57 entsteht eine unterschiedliche Breite des dortigen Teilstromes 66. Es ist aber auch möglich, die Fächerschurre 51 nur hinten schmaler einzustellen, so daß alle Teilströme 55, 66 nach hinten etwas schmaler verlaufen, wobei aber der Seitenversatz zum Mittelleitblech 57 geringer wird.

Für eine gute Führung haben sich bei der Streuung von Faserplatten in der Praxis Leitbleche 54, 56, 57 bewährt, die in vertikaler Richtung ca. 150 cm lang und in Förder- oder Bandlaufrichtung 62 ca. 100 cm breit sind. Dabei sind die Leitbleche 54, 56, 57 am Materialaustrittsende 58 zum Formband hin gegenüber einer horizontalen Ebene abgeschrägt, wobei die Schräge der Leitbleche 54, 56, 57 in Förderrichtung 62 abfallend ausgebildet ist, damit insbesondere im hinteren seitenversetzten Bereich eine lange Führungsstrecke zur Verfügung steht. Der Abschrägungswinkel der einzelnen Leitbleche 54, 56, 57 kann auch verschieden sein, um insbesondere bei den mittleren Leitblechen 57 in dessen vorderen Bereich nur eine kurze Führungsstrecke vorzusehen, um dort unterschiedliche Schrägstellungen durch kurze Führungswege auszugleichen.

In Fig. 8 der Zeichnung ist eine breitenverstellbare Fächerschurre dargestellt, bei der alle Leitbleche 54, 56, 57 so verschwenkt oder verschoben werden, daß an der Materialaustrittsstelle 58 die Leitbleche 54, 56, 57 gleiche Abstände zueinander aufweisen, um über die gesamte Breite eine verhältnismäßig gleiche Materialverteilung zu erzielen. Durch eine derartige Breitenverstellung wird eine gleichmäßige Materialverteilung auf dem Formband 53 erreicht, das zu einer kontinuierlichen Plattenqualität über die gesamte Breite führt. Um eine symmetrische Breitenverstellung zu den Mittelleitblech 57 zu erreichen, müssen die einzelnen Leitbleche 54, 56 jeder Fächerschurrenhälfte unten um unterschiedliche Seitenverschiebewege verstellt werden. Bei einer selbsttätigen Breitenverstellung muß deshalb bei der Vorgabe der Gesamtbreite an der Materialaustrittsstelle 58 jedes Leitblech 54, 56 soweit seitlich verschoben oder verschwenkt werden, daß sich zwischen den einzelnen Leitblechen 54, 56 ein etwa gleicher Abstand einstellt.

In Figur 11 der Zeichnung ist eine derartige selbsttätige Breitenverstellvorrichtung schematisch dargestellt. Die einzelnen Leitbleche 54, 56, 57 sind im Bereich der Materialaufgabestelle 52 schwenkbar aufgehängt und im unteren Drittel durch die Breitenverstellvorrichtung 69, die als gelenkige Hebelvorrichtung ausgebildet ist, miteinander verbunden. Die gelenkige Hebelvorrichtung 69 besteht im wesentlichen aus acht zwischen den Trennblechen 54, 56, 57 angeordneten Kniehebelgelenken 70 und einem Verstellhebelmechanismus 71. Die Kniehebelgelenke 70 werden aus zwei gleichlangen Gelenkarmen 72 gebildet, die mit einem Gelenkarmende an jeweils einem Leitblech 54, 56 und an dem anderen Ende an einer Laufrolle 73 gelenkig befestigt sind. Dabei besitzen die einzelnen Gelenkarme 72 mindestens eine Länge, die dem halben Abstand des maximalen Abstandes zwischen den Leitblechen 54, 56, 57 entspricht. Durch die gelenkige Verbindung der Kniegelenke 70 mit den Leitblechen 54, 56, 57 sind alle Leitbleche 54, 56, 57 mechanisch miteinander gekoppelt.

Zur Vergleichmäßigung der Breitenverstellung der Fächerschurre 51 sind auch in Förder- oder Bandlaufrichtung gesehen an der gegenüberliegenden Seite die gleichen Kniegelenke 70 angebracht. Die zwischen den Gelenkarmen 72 angeordneten Laufrollen 73 sind in einem geschlitzten U-Profilrohr angeordnet, das den Verstellmechanismus 71 darstellt. Das U-Profilrohr 71 ist horizontal und quer zur Förder- oder Bandlaufrichtung jeweils an Anfang und am Ende der Fächerschurre 51 angeordnet. Zur Breitenverstellung der Fächerschurre 51 ist das U-Profilrohr 71 an jedem Ende mit einem nicht näher dargestellten Vertikalantrieb 74 versehen, durch den der Verstellmechanismus 71 in beide Richtungen mit einer Linearbewegung vertikal verstellbar ist. Der Vertikalantrieb 74 kann als Zugspindelantrieb, als hydraulischer- oder pneumatischer Druckmittelzylinder oder in anderer Form eines Linearantriebs ausgebildet sein.

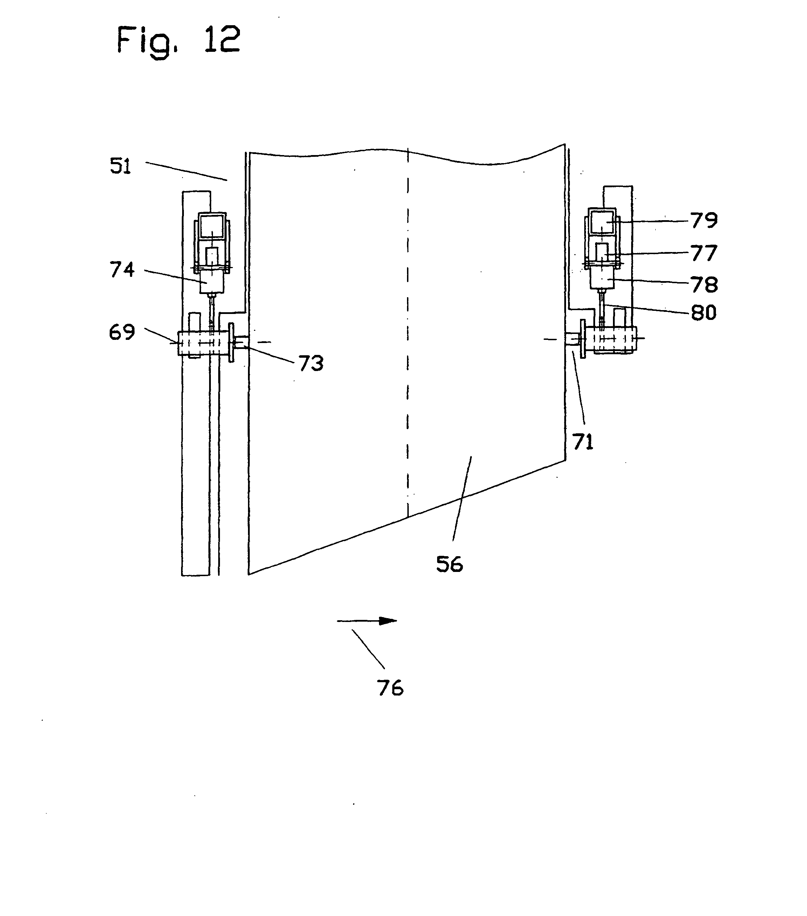

In Figur 12 der Zeichnung ist die Seitenansicht, der in Förder- oder Bandlaufrichtung 76 angeordneten Leitbleche 54, 56, 57 mit zwei Zugspindelantrieben 74 dargestellt. Dabei ist jeweils vorn und hinten eine gleichartige Breitenverstellvorrichtung 69 angeordnet, die jeweils Zugspindelantriebe 77 besitzen. Die Antriebsmotoren 78 sind jeweils an einem ortsfesten Querholm 79 gelenkig befestigt. Die in dem Getriebeantriebsmotor 78 vertikal verstellbare Zugspindel 80 ist an einem Flansch gelenkig aufgehängt, an dem das horizontale U-Profilrohr 71 angeordnet ist. Vorteilhafterweise ist die gesamte Verstellvorrichtung 69 vorn und hinten mit jeweils zwei Zugspindelantrieben 77 versehen, so daß eine gleichmäßige störungsfreie Höhenverstellung gewährleistet ist.

Soll nun die Fächerschurre 51 selbsttätig auf eine schmalere Streubreite eingestellt werden, wie dies in Figur 11 der Zeichnung dargestellt ist, so müssen die Zugspindelantriebe 77 gleichmäßig die beiden U-Profilrohre 71 nach oben bewegen. Dadurch wird der Abstand zwischen allen Leitblechen 54, 56, 57 automatisch gleichmäßig verringert, obwohl der seitliche Verstellweg bei den äußeren Leitblechen 56 größer ist als bei den inneren Leitblechen 54. Bei einer gleichmäßigen Höhenverstellung sowohl vorne als auch hinten bilden sich automatisch gleich breite und schmalere Teilströme 55, wobei sich alle Leitbleche 54, 56 parallel zur Förderrichtung 76 und symmetrisch zur Mitte bzw. Mittelleitblech 57 bewegen und nur das mittlere Leitblech 57 in seiner Lage verbleibt.

Mit einer derartigen Breitenverstellung 69 können die Leitbleche 54, 56, 57 soweit verstellt werden, daß sich nahezu beliebig schmale Teilströme 55 an der Materialaustrittsstelle 58 bilden. Da mit einer derartigen Fächerschurre 51 vorzugsweise Faserplatten gestreut werden, wird in der Praxis höchstens eine Breitenverstellung von ca. 30% erforderlich. Dazu dürfen sich die Teilströme 55 nach unten nicht zu spitzwinkelig verengen, da es sonst zu Materialstauungen kommen würde. Deshalb werden Leitblechlängen von ca. 1,5 bis 2 m vorgesehen.

Für eine spezielle Steuerung der Fächerschurre 51 kann die Breitenverstellvorrichtung 69 auch so ausgebildet sein, daß die vier Vertikalantriebe 74 auch einzeln steuerbar sind. Hierdurch ist es beispielsweise möglich, die Leitbleche 54, 56, 57 vorn in einem größeren und hinten in einem kleineren Abstand zueinander einzustellen. Dadurch werden die Leitbleche 54 ,56, 57 seitlich zur Förderrichtung 76 versetzt, so daß sie dann schräg im Förderstrom angeordnet sind. Da das mittlere Leitblech 57 unverändert in Förderrichtung 76 verbleibt, entsteht eine symmetrische Schrägstellung zur Fächerschurrenmitte.

Die Vertikalantriebe 74 können beispielsweise auch so gesteuert werden, daß das U-Profilrohr 71 in der horizontalen geneigt einstellbar ist, so daß sich sowohl vorn als auch hinten unterschiedliche Abstände zwischen den Leitblechen 54, 56, 57 ergeben, so daß damit auch gleichzeitig die Schrägstellung der Leitbleche 54, 56, 57 im Förderstrom beeinflußbar ist. Dabei kann die Schrägstellung derart gewählt werden, daß sich die Erhöhungen 59 und Vertiefungen 60 der Teilströme 55 in Förderrichtung 76 derart überlappen, daß eine sehr homogene, gleichmäßige Streuoberfläche erreichbar ist. Der Verstellmechanismus 71 kann auch so ausgebildet sein, daß er im Bereich des mittleren Leitbleches 57 geteilt ist. Dabei kann jedes Teil des Verstellmechanismus 71 sowohl als ganzes vertikal verstellt werden oder auch in der Mitte gelenkig befestigt sein, um es um diesen Punkt verschwenkbar zu gestalten.

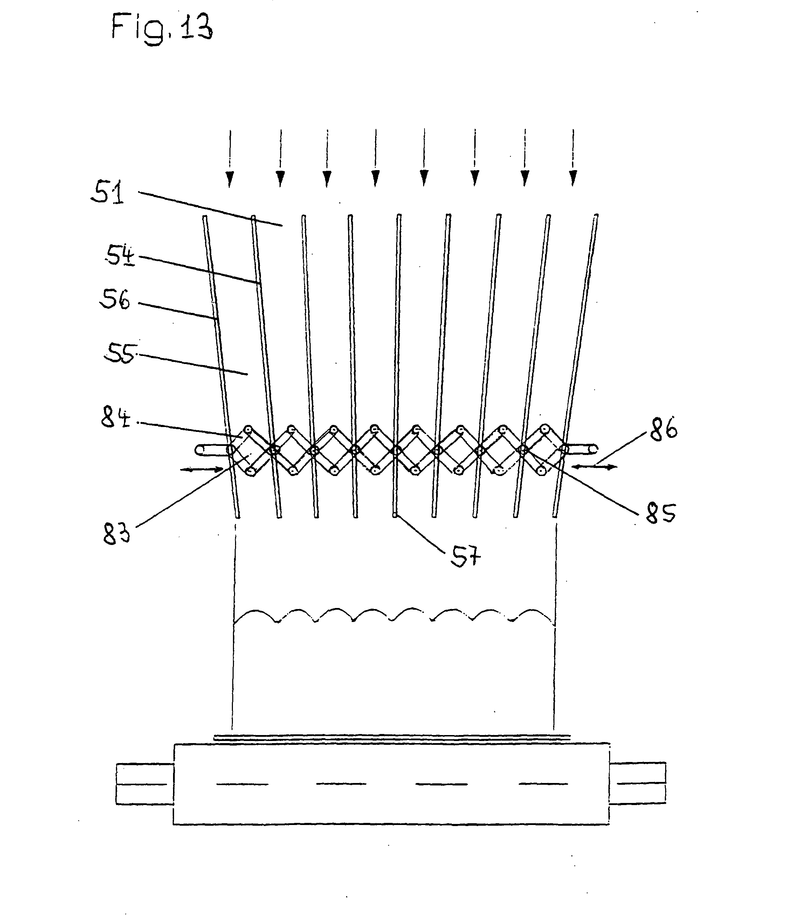

Im Figur 13 der Zeichnung ist ein weiteres Ausführungsbeispiel einer Breitenverstellung an einer Fächerschurre 51 nach Fig. 8 dargestellt. Bei dieser Breitenverstellung erfolgt eine gleichmäßige Abstandsänderung der Leitbleche 54, 56, 57 zueinander durch ein sogenanntes Scherengittergestänge 83 als gelenkige Hebelvorrichtung, dessen Änderung durch eine horizontale Linearbewegung 86 erreichbar ist. Dazu werden mindestens achtzehn Verstellhebel 84 in Form eines Scherengitters gelenkig miteinander und an den Kreuzungspunkten 85 zusätzlich an einem Leitblech 54, 56, 57 gelenkig befestigt. Durch einen horizontalen Linearantrieb, wie beispielsweise ein Zugspindelantrieb 77 oder dergleichen, kann der Abstand zwischen den Leitblechen 54, 56, 57 gleichmäßig verändert werden. Soll die Breite der Fächerschurre 51 symmetrisch zum Mittelleitblech 57 veränderbar sein, so muß der Antrieb 77 auch symmetrisch zum Mittelleitblech 57 erfolgen. Beispielsweise könnte an jedem Randleitblech 56 ein separater Linearantrieb 77 vorgesehen werden, der eine synchrone Horizontalbewegung 86 nach innen oder außen bewirkt. Ein derartiges Scherengittergestänge 83 würde vorteilhafterweise an der Fächerschurre 51 in Förderrichtung 76 sowohl vorn als auch hinten vorgesehen, wodurch bei einer synchronen Steuerung der Linearantriebe 77 eine gleichmäßige Breitenverstellung erreichbar wäre. Ein derartiges Scherengittergestänge 83 kann auch so ausgebildet sein, daß es gegenüber einer horizontalen Linie als Ganzes oder um ein Drehpunkt verschwenkbar ist. Dadurch sind dann unterschiedliche Verstellwege zwischen den Leitblechen 54, 56, 57 möglich. Durch eine weitere unterschiedliche Breitenverstellung der Leitbleche 54, 56 vorn und hinten kann auch eine Schrägstellung der Leitbleche 54, 56 zur Förderrichtung 76 erreicht werden, wodurch eine Glättung der Streuoberfläche erzielbar ist.

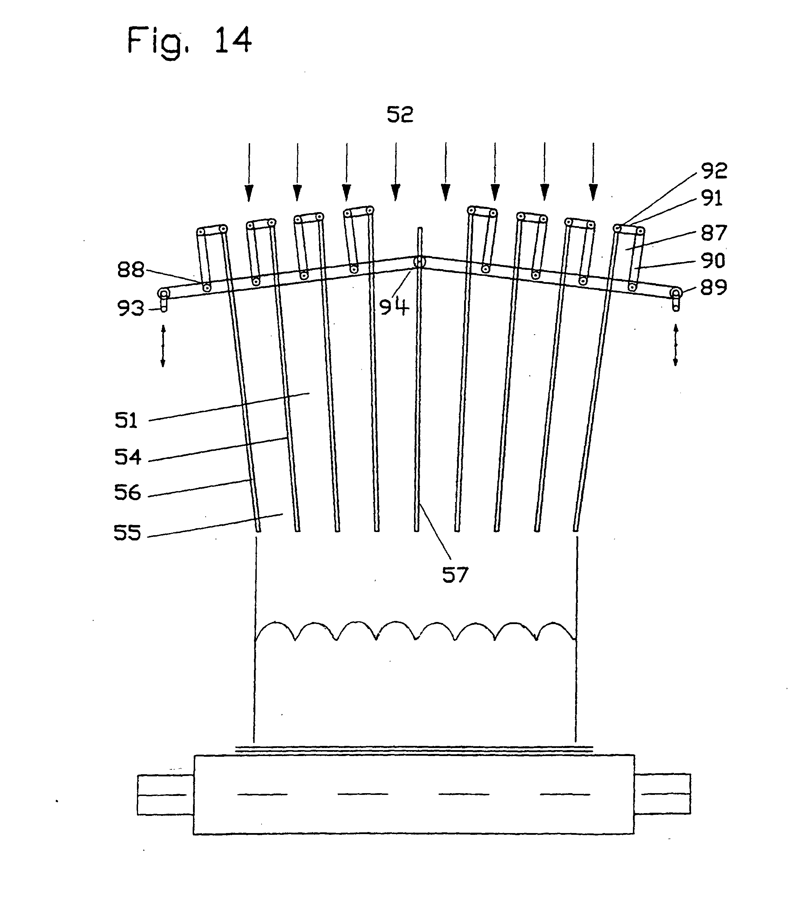

In Figur 14 der Zeichnung ist ein weiteres Ausführungsbeispiel einer selbsttätigen Breitenverstellung an einer Fächerschurre 51 nach Fig. 8 der Zeichnung dargestellt. Dabei sind die Leitbleche 54, 56, 57 bis auf das mittlere Leitblech 57 oben im Bereich der Materialaufgabestelle 52 drehbar gelagert. Die Breitenverstellvorrichtung ist als gelenkige Hebelvorrichtung ausgebildet und im oberen Bereich der Fächerschurre 51 angeordnet und bewirkt ein verschwenken der einzelnen Leitbleche 54, 56 gegenüber einer vertikalen Ausrichtung. Die gelenkige Hebelvorrichtung besteht im wesentlichen aus zwei symmetrisch zum Mittelleitblech 57 angeordneten Teilen, die jeweils vier Gelenkhebelverbindungen 87 enthalten, die an einem gemeinsamen Einstellhebel 89 gelenkig befestigt sind und eine Gelenkhebelanordnung 88 darstellen. Die Gelenkhebelverbindungen 87 bestehen jeweils aus einem etwa horizontal ausgerichteten Hebelarm 91 und einem etwa vertikal ausgerichteten Hebelarm 90. Der horizontale Hebelarm 91 ist an einem Ende fest mit dem Drehpunkt 92 der Leitbleche 54, 56 verbunden und mit dem anderen Ende gelenkig an dem vertikalen Hebelarm 90 befestigt. Der vertikale Hebelarm 90 ist mit seinem unteren Ende an dem gemeinsamen Einstellhebel 89 gelenkig angeordnet. Der Einstellhebel 89 ist im wesentlichen hebel 89 ist im wesentlichen horizontal ausgerichtet und im Bereich des Mittelleitbleches 57 drehbar gelagert. An den anderen Enden sind die Einstellhebel 89 mit einem nicht näher dargestellten Antrieb 93 verbunden, der eine Linearbewegung erzeugt, und durch die die Leitbleche 59, 56 gegenüber der vertikalen Ausrichtung seitlich verschwenkt werden können.

Werden die Einstellhebel 89 um einen gemeinsamen Drehpunkt 94 nach unten bewegt, so wird über die Gelenkhebelverbindungen 87 ein Drehmoment um die Aufhängungen der Leitbleche 54, 56 erzeugt, so daß bis auf das mittlere Leitblech 57 alle nach innen verschwenkt werden. Hierdurch wird die Streubreite der Fächerschurre 51 auf eine schmalere Streubreite eingestellt. Da alle Gelenkhebelverbindungen 87 über die gleichen Gelenkhebellängen verfügen, erfolgt eine unterschiedliche Verschwenkung der Leitbleche 54, 56, die mit der Entfernung vom gemeinsamen Drehpunkt 94 größer wird. Dabei werden die äußeren Leitbleche 56 automatisch seitlich weiter verschwenkt als die inneren Leitbleche 54, so daß bei einer synchronen Bewegung der Antriebe 93 die horizontalen Abstände zwischen allen Leitblechen 54, 56, 57 stets gleich bleiben, so daß alle Teilströme 55 kontinuierlich schmaler werden. Allerdings können die Antriebe 93 am Anfang und Ende der Fächerschurre 51 auch mit unterschiedlichen Verschwenkwegen gesteuert werden, so daß sich eine Schrägstellung der Leitbleche 54, 56 gegenüber der Förderrichtung 76 ergibt. Es ist auch denkbar, daß jede Fächerschurrenhälfte separat angesteuert wird, um eventuelle Förderunterschiede in den Teilströmen oder Oberflächenunebenheiten auszugleichen. Insbesondere bei der Streuung von Faserplatten kann durch die individuelle Steuerung der Antriebe 93 nicht nur die Breite selbsttätig verändert werden, sondern auch die Oberflächenwelligkeit weitgehend vermieden werden.

Für eine individuelle Steuerung jedes Einstellhebels 89 sind vier Antriebe 93 erforderlich, womit jede Fächerschurrenhälfte sowohl vorn als auch hinten selbsttätig in der Breite und damit auch die Leitblechstellung zur Förderrichtung 76 einstellbar ist. Durch die Breitenverstellung der Fächerschurre 51 mit derartigen Gelenkhebelanordnungen 88 sind auf einfache Weise mit wenigen Linearantrieben 93 Fächerschurren 51 mit bis zu dreißig Leitblechen 54, 56, 57 gemeinsam in der Breite und der Ausrichtung zur Förderrichtung 76 verstellbar. Dabei kann die Einstellung selbsttätig auch während des Streuvorgangs erfolgen, ohne das dabei der Plattenherstellungsprozeß unterbrochen werden müßte.

## Patentansprüche

1. Formstation mit einem Dosierbunker (1) aus dem rieselfähige Güter, insbesondere span- und faserförmige Güter, einer Streuvorrichtung (3, 24) zugeführt werden, durch die ein Materialvlies (5) auf ein Formband (4) aufstreubar ist, wobei zwischen dem Dosierbunker (1) und dem Formband (4, 53) vertikal und längs im Förderstrom eine Fächerschurre (2, 51) vorgesehen ist, die aus mehreren in Förderrichtung (36) nebeneinander angeordneten Leitblechen (9, 39, 40, 41, 54, 56, 57) besteht, die den Förderstrom in Förderrichtung (36, 62, 76) in mehrere Teilströme (38, 55, 56) unterteilen und wobei die benachbarten Leitbleche so beabstandet sind, daß sich zwischen ihnen ein Teilstrom (38, 55, 56) ausbildet.

2. Formstation nach Anspruch 1, **dadurch gekennzeichnet, daß** die Abstände der Leitbleche (9, 39, 40, 41, 54, 56, 57) voneinander und/oder von einer vertikalen Ausrichtung einstellbar sind, wodurch der Förderstrom seitlich umlenkbar und/oder in der Breite verstellbar ist.

3. Formstation nach Anspruch 1 oder 2, **dadurch gekennzeichnet, daß** die Fächerschurre (2, 51) unmittelbar zwischen dem Dosierbunker (1) und dem Formband (4, 53) oder dem Dosierbunker (1) und einer zusätzlichen Fördervorrichtung (23) und/oder der Fördervorrichtung (23) und einem Streukopf (3, 24) oder dem Dosierbunker (1) und dem Streukopf (3, 24) angeordnet ist.

4. Formstation nach Anspruch 3, **dadurch gekennzeichnet, daß** die zusätzliche Fördervorrichtung (23) oder das Bodenband (6) des Dosierbunkers (1) als Dosierbandwaage (21, 23) ausgebildet ist, durch die die zuführbare Materialmenge regelbar ist.

5. Formstation nach einem der vorhergehenden Ansprüche, **dadurch gekennzeichnet, daß** die Fächerschurre (2, 51) mindestens vier Leitbleche (9, 39, 40, 41, 54, 56, 57) enthält, wobei zwei als Seitenbegrenzung (39, 40, 56) dienen.

6. Formstation nach einem der vorhergehenden Ansprüche, **dadurch gekennzeichnet, daß** die Leitbleche (9, 39, 40, 41, 54, 56, 57) verschwenkbar oder verschiebbar gelagert sind, wobei diese mindestens an einem Lagerpunkt (37, 92) quer zur Förderrichtung (36, 62, 76) verschwenkbar und/oder verschiebbar sind.

7. Formstation nach einem der vorhergehenden Ansprüche, **dadurch gekennzeichnet, daß** die Leitbleche (9, 39, 40, 41, 54, 56, 57) einzeln oder in Gruppen steuerbar sind, wobei diese einzeln oder gruppenweise kontinuierlich, diskontinuierlich oder stufenweise aufeinander zu oder voneinander weg bewegbar sind.

8. Formstation nach einem der vorhergehenden Ansprüche, **dadurch gekennzeichnet, daß** die Leitbleche (9, 39, 40, 41, 54, 56, 57) als flache, gerade Bleche ausgebildet sind oder quer zur Längsrichtung (36) wellen- oder sägezahnartig oder in davon abgewandelten Formen strukturiert sind.

9. Formstation nach einem der vorhergehenden Ansprüche, **dadurch gekennzeichnet, daß** die Leitbleche (9, 39, 40, 41, 54, 56, 57) rechteckförmig oder quadratisch ausgebildet sind, oder im Aufgabebereich (12, 52) und/oder Abführbereich (13, 15, 58) über in Förderrichtung (14) oder entgegen der Förderrichtung (14) schräg ansteigende Kanten verfügen, wobei die Kanten gerade, gewölbt, wellen- oder sägezahnförmig verlaufen.

10. Formstation nach einem der vorhergehenden Ansprüche, **dadurch gekennzeichnet, daß** die Leitbleche (9, 39, 40, 41, 54, 56, 57) gleich oder unterschiedlich lang sind und/oder die Kanten (12, 13, 15) im Aufgabebereich und/oder Abführbereich gleich oder verschieden ausgebildet sind.

11. Formstation nach einem der vorhergehenden Ansprüche, **dadurch gekennzeichnet, daß** die Leitbleche (9, 39, 40, 41, 54, 56, 57) aus Metall, Kunststoff, oder Verbundstoffen bestehen, wobei deren Oberflächen gegen Korrosion und/oder Abrieb und/oder Anhaftung geschützt sind.

12. Formstation nach einem der vorhergehenden Ansprüche, **dadurch gekennzeichnet, daß** einige oder alle Leitbleche (9, 39, 40, 41) mit einem Schwingungserreger gekoppelt sind, durch die die Leitbleche (9, 39, 40, 41, 54, 56, 57) quer zur Förderrichtung (36) in Schwingung versetzt werden.

13. Formstation nach einem der vorhergehenden Ansprüche, **dadurch gekennzeichnet, daß** die Leitbleche (9, 39, 40, 41, 54, 56, 57) in Längsrichtung (36) ein- oder mehrteilig ausgebildet sind, wobei die einzelnen Teile gegeneinander in der Länge und/oder in der seitlichen Ausrichtung verstellbar sind.

14. Formstation nach einem der vorhergehenden Ansprüche, **dadurch gekennzeichnet, daß** die Leitbleche (9, 39, 40, 41, 54, 56, 57) mindestens in Längsrichtung (36) flexibel ausgebildet sind, wobei diese seitlich ganz oder abschnittsweise verstellbar angeordnet sind.

15. Formstation nach einem der vorhergehenden Ansprüche, **dadurch gekennzeichnet, daß** die Fächerschurre (2, 51) und/oder die Fördervorrichtung (23) und/oder die Streuvorrichtung (3, 24) in der horizontalen Ausrichtung (16) nach oben und/oder unten verstellbar sind.

16. Formstation nach einem der vorhergehenden Ansprüche, **dadurch gekennzeichnet, daß** die Fächerschurre (2, 51) und/oder die Fördervorrichtung (23) und/oder die Streuvorrichtung (3, 24) in der Förder- und/oder Streubreite um ca. bis zu 30 vom 100 (30%) verstellbar sind.

17. Formstation nach einem der vorhergehenden Ansprüche, **dadurch gekennzeichnet, daß** die Formstation über einen Streukopf (3, 24) verfügt, der quer zur Förderrichtung (14) angeordnete Streuwalzen (30) enthält.

18. Formstation nach einem der vorhergehenden Ansprüche, **dadurch gekennzeichnet, daß** die nebeneinander angeordneten Leitbleche (54, 56, 57) oder zumindest Gruppen von Leitblechen (54, 56) mindestens unten an der Materialaustrittsstelle (58) schräg zur Förderrichtung (62, 76) angeordnet sind.

19. Formstation nach einem der vorhergehenden Ansprüche, **dadurch gekennzeichnet, daß** die Abstände der Leitbleche (54, 56, 57) voneinander und/oder quer zu einer vertikalen Ausrichtung einstellbar sind, wodurch der Förderstrom seitlich umlenkbar und/oder in der Breite verstellbar ist, wobei zumindest die Leitbleche (57) in der Mitte der Fächerschurre (51) an der Materialaustrittsstelle (58) in Förderrichtung (62, 76) vorn größere Abstände voneinander aufweisen als hinten.

20. Formstation nach einem der vorhergehenden Ansprüche, **dadurch gekennzeichnet, daß** die Leitbleiche (54, 56, 57) gleich oder unterschiedlich lang sind und die Leitbleche (54, 56, 57) mindestens an der Materialaustrittsstelle (58) in Förderrichtung (62, 76) gegenüber einer horizontalen Ebene schräg verlaufen.

21. Formstation nach einem der vorhergehenden Ansprüche, **dadurch gekennzeichnet, daß** alle oder zumindest Gruppen von nebeneinander angeordneten Leitbleche (54, 56, 57) durch eine gelenkige Hebelvorrichtung (69, 88, 83) so miteinander verbunden sind, daß durch die Einwirkung einer Linearbewegung (74, 86, 93) auf die Hebelvorrichtung (69, 83, 88) die Breite und/oder die seitliche Ausrichtung der Teilströme (55, 66) selbsttätig einstellbar ist.

22. Formstation nach einem der vorhergehenden Ansprüche, **dadurch gekennzeichnet, daß** an jedem verstellbaren Leitblech (54, 56) mindestens zwei gelenkig verbundene Hebel (72, 84, 91, 90) vorgesehen sind, deren Winkelstellung zueinander durch die Einwirkung der Linearbewegung (74, 86, 93) veränderbar ist.

23. Formstation nach einem der vorhergehenden Ansprüche, **dadurch gekennzeichnet, daß** die gelenkige Hebelvorrichtung (69, 83, 88) als Kniehebelanordnung (69, 70), als Scherengitteranordnung (83) oder als Gelenkhebelanordnung (88) ausgebildet ist.

24. Formstation nach einem der vorhergehenden Ansprüche, **dadurch gekennzeichnet, daß** die Kniehebelanordnung (69, 70) aus gleichlangen zwischen allen verstellbaren Leitblechen (54, 55, 57) angeordneten Kniehebelgelenken (70) besteht, an dessen Gelenkpunkten ein ein- oder mehrteiliger Verstellhebelarm (71) angreift, durch den die Winkel der Kniehebelgelenke (70) veränderbar sind.

25. Formstation nach einem der Ansprüche 21 bis 23, **dadurch gekennzeichnet, daß** die Scherengitteranordnung (83) aus mehreren gleichlangen parallelogrammartig verbundenen Gelenkhebeln bzw. Verstellhebeln (84) besteht, deren Kreuzungspunkte (85) gelenkig mit den verstellbaren Leitblechen (54, 56, 57) gekoppelt sind, wobei die Winkel zwischen den Gelenken durch eine lineare Kraft- oder Bewegungseinwirkung veränderbar sind.

## Claims

1. Forming station comprising a proportioning hopper (1), from which pourable materials, in particular materials in chip and fibre form, are supplied to a spreading apparatus (3, 24), by means of which a material web (5) is spreadable onto a forming belt (4), wherein between the proportioning hopper (1) and the forming belt (4, 53) a fanning chute (2, 51) is provided vertically and longitudinally in the feed stream and comprises a plurality of guide plates (9, 39, 40, 41, 54, 56, 57), which are juxtaposed in conveying direction (36) and subdivide the feed stream in conveying direction (36, 62, 76) into a plurality of partial streams (38, 55, 56), and wherein the adjacent guide plates are spaced apart in such a way as to form between them a partial stream (38, 55, 56).

2. Forming station according to claim 1, **characterized in that** the spacings of the guide plates (9, 39, 40, 41, 54, 56, 57) from one another and/or from a vertical alignment are adjustable, with the result that the feed stream is laterally deflectable and/or adjustable in width.

3. Forming station according to claim 1 or 2, **characterized in that** the fanning chute (2, 51) is disposed immediately between the proportioning hopper (1) and the forming belt (4, 53) or the proportioning hopper (1) and an additional conveying apparatus (23) and/or the conveying apparatus (23) and a spreading head (3, 24) or the proportioning hopper (1) and the spreading head (3, 24).

4. Forming station according to claim 3, **characterized in that** the additional conveying apparatus (23) or the bottom belt (6) of the proportioning hopper (1) is designed as a proportioning belt weigher (21, 23), by means of which the feedable material quantity is controllable.

5. Forming station according to one of the preceding claims, **characterized in that** the fanning chute (2, 51) comprises at least four guide plates (9, 39, 40, 41, 54, 56, 57), wherein two are used as a lateral boundary means (39, 40, 56).

6. Forming station according to one of the preceding claims, **characterized in that** the guide plates (9, 39, 40, 41, 54, 56, 57) are pivotably or displaceably mounted, wherein they are pivotable and/or displaceable transversely relative to the conveying direction (36, 62, 76) at least at one bearing point (37, 92).

7. Forming station according to one of the preceding claims, **characterized in that** the guide plates (9, 39, 40, 41, 54, 56, 57) are controllable individually or in groups, wherein they are movable individually or in groups continuously, intermittently or stepwise towards or away from one another.

8. Forming station according to one of the preceding claims, **characterized in that** the guide plates (9, 39, 40, 41, 54, 56, 57) take the form of flat, straight plates or are structured transversely relative to the longitudinal direction (36) in an undulating or sawtooth manner or in modified forms thereof.

9. Forming station according to one of the preceding claims, **characterized in that** the guide plates (9, 39, 40, 41, 54, 56, 57) are of a rectangular or square design, or in the charging region (12, 52) and/or removal region (13, 15, 58) have edges rising obliquely in conveying direction (14) or counter to conveying direction (14), wherein the edges extend in a straight, curved, undulating or sawtooth manner.

10. Forming station according to one of the preceding claims, **characterized in that** the guide plates (9, 39, 40, 41, 54, 56, 57) are of equal or differing length and/or the edges (12, 13, 15) in the charging region and/or removal region are of an identical or differing design.

11. Forming station according to one of the preceding claims, **characterized in that** the guide plates (9, 39, 40, 41, 54, 56, 57) are made of metal, plastics material or composite materials, wherein their surfaces are protected against corrosion and/or abrasion and/or adhesion.

12. Forming station according to one of the preceding claims, **characterized in that** some or all of the guide plates (9, 39, 40, 41) are coupled to a vibration exciter, by means of which the guide plates (9, 39, 40, 41, 54, 56, 57) are set in vibration transversely relative to the conveying direction (36).

13. Forming station according to one of the preceding claims, **characterized in that** the guide plates (9, 39, 40, 41, 54, 56, 57) in longitudinal direction (36) are of a one- or multi-piece construction, wherein the individual parts are adjustable in length and/or in lateral alignment relative to one another.

14. Forming station according to one of the preceding claims, **characterized in that** the guide plates (9, 39, 40, 41, 54, 56, 57) at least in longitudinal direction (36) are of a flexible design, wherein they are disposed so as to be laterally adjustable in whole or in sections.

15. Forming station according to one of the preceding claims, **characterized in that** the fanning chute (2, 51) and/or the conveying apparatus (23) and/or the spreading apparatus (3, 24) are adjustable in horizontal alignment (16) upwards and/or downwards.

16. Forming station according to one of the preceding claims, **characterized in that** the fanning chute (2, 51) and/or the conveying apparatus (23) and/or the spreading apparatus (3, 24) are adjustable in feed and/or spreading width by ca. up to 30 of 100 (30%).

17. Forming station according to one of the preceding claims, **characterized in that** the forming station is equipped with a spreading head (3, 24), which comprises spreader rolls (30) disposed transversely relative to the conveying direction (14).

18. Forming station according to one of the preceding claims, **characterized in that** the juxtaposed guide plates (54, 56, 57) or at least groups of guide plates (54, 56) at least down at the material outlet point (58) are disposed obliquely relative to the conveying direction (62, 76).

19. Forming station according to one of the preceding claims, **characterized in that** the spacings of the guide plates (54, 56, 57) from one another and/or transversely relative to a vertical alignment are adjustable, with the result that the feed stream is laterally deflectable and/or adjustable in width, wherein at the material outlet point (58) at least the guide plates (57) in the middle of the fanning chute (51) are at a greater distance from one another at the front than at the rear in conveying direction (62, 76).

20. Forming station according to one of the preceding claims, **characterized in that** the guide plates (54, 56, 57) are of equal or differing length and the guide plates (54, 56, 57) at least at the material outlet point (58) extend in conveying direction (62, 76) obliquely relative to a horizontal plane.

21. Forming station according to one of the preceding claims, **characterized in that** all or at least groups of juxtaposed guide plates (54, 56, 57) are connected by an articulated lever apparatus (69, 88, 83) in such a way to one another that by the action of a linear movement (74, 86, 93) upon the lever apparatus (69, 83, 88) the width and/or the lateral alignment of the partial streams (55, 56) is automatically adjustable.

22. Forming station according to one of the preceding claims, **characterized in that** on each adjustable guide plate (54, 56) at least two hinge-connected levers (72, 84, 91, 90) are provided, the angular position of which relative to one another is variable by means of the action of the linear movement (74, 86, 93).

23. Forming station according to one of the preceding claims, **characterized in that** the articulated lever apparatus (69, 83, 88) takes the form of a knee lever arrangement (69, 70), a folding trellis arrangement (83) or an articulated lever arrangement (88).

24. Forming station according to one of the preceding claims, **characterized in that** the knee lever arrangement (69, 70) comprises knee joints (70) of equal length, which are disposed between all of the adjustable guide plates (54, 56, 57) and upon the hinge points of which a one- or multi-piece adjusting lever arm (71) acts, by means of which the angles of the knee joints (70) are variable.

25. Forming station according to one of claims 21 to 23, **characterized in that** the folding trellis arrangement (83) comprises a plurality of articulated levers and/or adjusting levers (84) of equal length, which are connected in a parallelogram-like manner and the intersection points (85) of which are connected in an articulated manner to the adjustable guide plates (54, 56, 57), wherein the angles between the joints are variable by means of the action of a linear force or movement.

## Revendications

1. Poste de formage comportant une trémie de dosage (1) à partir de laquelle des produits coulants, en particulier des produits sous forme de copeaux et de fibres, sont amenés à un dispositif d'épandage (3, 24), au moyen duquel une nappe de matière (5) peut être épandue sur une bande de formage (4), une goulotte en éventail (2, 51) étant prévue verticalement et longitudinalement dans le courant de transport, entre la trémie de dosage (1) et la bande de formage (4, 53), laquelle goulotte est constituée de plusieurs tôles de guidage (9, 39, 40, 41, 54, 56, 57) disposées côte à côte dans la direction de transport (36), lesquelles tôles de guidage divisent le courant de transport dans la direction de transport (36, 62, 76) en plusieurs courants partiels (38, 55, 56), et les tôles de guidage adjacentes étant espacées de manière qu'un courant partiel (38, 55, 56) se forme entre elles.

2. Poste de formage selon la revendication 1, **caractérisé en ce que** les écartements des tôles de guidage (9, 39, 40, 41, 54, 56, 57) et/ou leur distance par rapport à une orientation verticale sont réglables, ce qui fait que le courant de transport peut être dévié latéralement et/ou réglé en largeur.

3. Poste de formage selon la revendication 1 ou 2, **caractérisé en ce que** la goulotte en éventail (2, 51) est disposée directement entre la trémie de dosage (1) et la bande de formage (4, 53) ou entre la trémie de dosage (1) et un dispositif de transport supplémentaire (23) et/ou entre le dispositif de transport (23) et une tête d'épandage (3, 24) ou entre la trémie de dosage (1) et la tête d'épandage (3, 24).

4. Poste de formage selon la revendication 3, **caractérisé en ce que** le dispositif de transport supplémentaire (23) ou la bande de fond (6) de la trémie de dosage (1) est réalisé en tant que bande bascule de dosage (21, 23) par laquelle la quantité de matière à amener est réglable.

5. Poste de formage selon l'une des revendications précédentes, **caractérisé en ce que** la goulotte en éventail (2, 51) contient au moins quatre tôles de guidage (9, 39, 40, 41, 54, 56, 57), deux d'entre elles servant de délimitation latérale (39, 40, 56).

6. Poste de formage selon l'une des revendications précédentes, **caractérisé en ce que** les tôles de guidage (9, 39, 40, 41, 54, 56, 57) sont montées de manière à pouvoir pivoter ou coulisser, celles-ci pouvant pivoter et/ou coulisser au moins en un point d'appui (37, 92), transversalement à la direction de transport (36, 62, 76).

7. Poste de formage selon l'une des revendications précédentes, **caractérisé en ce que** les tôles de guidage (9, 39, 40, 41, 54, 56, 57) peuvent être commandées individuellement ou en groupe, celles-ci étant déplaçables individuellement ou en groupe, de manière continue, discontinue ou par crans, les unes vers les autres ou de manière à s'éloigner les unes des autres.

8. Poste de formage selon l'une des revendications précédentes, **caractérisé en ce que** les tôles de guidage (9, 39, 40, 41, 54, 56, 57) sont réalisées comme tôles plates et rectilignes ou sont structurées, transversalement à la direction longitudinale (36), ondulées ou en dents de scie, ou sous des formes différentes de celles-ci.

9. Poste de formage selon l'une des revendications précédentes, **caractérisé en ce que** les tôles de guidage (9, 39, 40, 41, 54, 56, 57) sont de forme rectangulaire ou carrée, ou disposent, dans la zone de chargement (12, 52) et/ou la zone d'évacuation (3, 15, 58), de bords montant obliquement dans le sens de transport (14) ou dans le sens opposé au sens de transport (14), les bords étant droits, bombés, ondulés ou en dents de scie.

10. Poste de formage selon l'une des revendications précédentes, **caractérisé en ce que** les tôles de guidage (9, 39, 40, 41, 54, 56, 57) présentent une même longueur ou une longueur différente et/ou les bords (12, 13, 15) sont réalisés à l'identique ou différents dans la zone de chargement et/ou la zone d'évacuation.

11. Poste de formage selon l'une des revendications précédentes, **caractérisé en ce que** les tôles de guidage (9, 39, 40, 41, 54, 56, 57) sont en métal, en matière plastique ou en matériaux composites, leurs surfaces étant protégées contre la corrosion et/ou l'abrasion et/ou l'adhérence.

12. Poste de formage selon l'une des revendications précédentes, **caractérisé en ce que** quelques tôles de guidage (9, 39, 40, 41) ou toutes celles-ci sont couplées à un générateur d'oscillations par lequel les tôles de guidage (9, 39, 40, 41, 54, 56, 57) sont mises en oscillation transversalement à la direction de transport (36).

13. Poste de formage selon l'une des revendications précédentes, **caractérisé en ce que** les tôles de guidage (9, 39, 40, 41, 54, 56, 57) sont réalisées en une ou plusieurs parties dans la direction longitudinale (36), les différentes parties étant réglables les unes par rapport aux autres en longueur et/ou dans l'orientation latérale.

14. Poste de formage selon l'une des revendications précédentes, **caractérisé en ce que** les tôles de guidage (9, 39, 40, 41, 54, 56, 57) sont réalisées flexibles au moins dans la direction longitudinale (36), celles-ci étant disposées déplaçables latéralement, entièrement ou en partie.

15. Poste de formage selon l'une des revendications précédentes, **caractérisé en ce que** la goulotte en éventail (2, 51) et/ou le dispositif de transport (23) et/ou le dispositif d'épandage (3, 24) sont réglables vers le haut et/ou vers le bas dans la direction horizontale (16).

16. Poste de formage selon l'une des revendications précédentes, **caractérisé en ce que** la goulotte en éventail (2, 51) et/ou le dispositif de transport (23) et/ou le dispositif d'épandage (3, 24) sont réglables dans la largeur de transport et/ou la largeur d'épandage jusqu'à environ 30 pour 100 (30 %).

17. Poste de formage selon l'une des revendications précédentes, **caractérisé en ce que** le poste de formage dispose d'une tête d'épandage (3, 24) qui contient des cylindres d'épandage (30) disposés transversalement à la direction de transport (14).

18. Poste de formage selon l'une des revendications précédentes, **caractérisé en ce que** les tôles de guidage (54, 56, 57) disposées côte à côte ou au moins des groupes de tôles de guidage (54, 56) sont disposés obliquement par rapport à la direction de transport (62, 76), au moins à la partie inférieure, au point de sortie du matériau.

19. Poste de formage selon l'une des revendications précédentes, **caractérisé en ce que** les distances réciproques des tôles de guidage (54, 56, 57) et/ou transversalement à une orientation verticale sont réglables, ce qui fait que le courant de transport peut être dévié latéralement et/ou réglé en largeur, au moins les tôles de guidage (57) au milieu de la goulotte en éventail (51) présentant, au point de sortie du matériau (58), de plus grandes distances réciproques à l'avant qu'à l'arrière dans le sens de transport (62, 76).

20. Poste de formage selon l'une des revendications précédentes, **caractérisé en ce que** les tôles de guidage (54, 56, 57) présentent une longueur identique ou différente et les tôles de guidage (54, 56, 57) s'étendent obliquement par rapport à un plan horizontal au moins au point de sortie du matériau (58) dans le sens de transport (62, 76).

21. Poste de formage selon l'une des revendications précédentes, **caractérisé en ce que** toutes les tôles de guidage (54, 56, 57) disposées côte à côte ou au moins des groupes de celles-ci, sont reliés entre eux par un dispositif à levier (69, 88, 83), de manière que sous l'effet d'un mouvement linéaire (74, 86, 93) sur le dispositif à levier (69, 83, 88), la largeur et/ou l'orientation latérale des courants partiels (55, 56) est réglable automatiquement.

22. Poste de formage selon l'une des revendications précédentes, **caractérisé en ce que** sur chaque tôle de guidage (54, 56) réglables sont prévus au moins deux leviers (72, 84, 91, 90) reliés de manière articulée, dont la position angulaire réciproque est variable sous l'effet du mouvement linéaire (74, 86, 93).

23. Poste de formage selon l'une des revendications précédentes, **caractérisé en ce que** le dispositif à levier articulés (69, 83, 88) est réalisé comme agencement de leviers articulés (69, 70), comme agencement de grilles en ciseaux (83) ou comme agencement de leviers à articulation (88).

24. Poste de formage selon l'une des revendications précédentes, **caractérisé en ce que** l'agencement de leviers articulés (69, 70) est constitué d'articulations à leviers articulés (70) de même longueur, disposés entre toutes les tôles de guidage (54, 56, 57) réglables, aux points d'articulation desquelles agit un bras de levier de réglage (71) en une ou plusieurs parties, par lequel les angles des articulations à leviers articulés (70) sont réglables.

25. Poste de formage selon l'une des revendications 21 à 23, **caractérisé en ce que** l'agencement de grilles à ciseaux (83) est constitué de plusieurs leviers à articulation ou leviers de réglage (84) de même longueur, reliés en parallélogramme, dont les points de croisement (85) sont couplés de manière articulée aux tôles de guidage (54, 56, 57) réglables, les angles entre les articulations pouvant être modifiés par une action linéaire à force ou de déplacement.
